# EUROPEAN PATENT SPECIFICATION

(11) **EP 3 984 871 B1**
(45) Date of publication and mention of the grant of the patent: **16.08.2023**
(21) Application number: 21196905.0
(22) Date of filing: 15.09.2021
(51) Int. Cl.: B62J 25/06, B62J 25/04, B62J 17/00

(54) **STRADDLED VEHICLE**
GRÄTSCHSITZFAHRZEUG
VÉHICULE À ENFOURCHER

(30) Priority: 16.10.2020 JP 2020174981
(43) Date of publication of application: 20.04.2022
(73) Proprietor: Yamaha Hatsudoki Kabushiki Kaisha, Iwata-shi, Shizuoka-ken 438-8501 (JP)
(72) Inventor: Agustanto, Rheza Aldila, 13920 Daerah Khusus Ibukota Jakarta (ID); Hasegawa, Hirofumi, Iwata-shi, Shizuoka-ken 438-8501 (JP)
(74) Representative: Grünecker Patent- und Rechtsanwälte PartG mbB

(56) References cited:
- US-A1- 2007 241 533

## Description

The present invention relates to a straddled vehicle according to the preamble of independent claim 1. Such a straddled vehicle can be taken from the prior art document US 2007/241533 A1.

JP 2013067304 A discloses a scooter that is an example of straddled vehicles. This scooter includes a step floor on which both feet of a driver are placed and a pair of pillion steps on which both feet of a passenger are placed. The pillion step is foldable. The entire pillion step cannot be moved with respect to a frame although the pillion step is movable between a use position and a non-use position with respect to the frame.

JP H0492791 A also discloses a scooter that is an example of straddled vehicles. This scooter includes a footrest board on which both feet of a driver and both feet of a passenger are placed. The footrest board includes a front footrest board on which both feet of the driver are placed and a pair of rear footrest boards on which both feet of the passenger are placed. The rear footrest board extends rearward from the front footrest board. The front footrest board and the rear footrest board are each a portion of an exterior cover that forms a surface of the scooter.

The scooters disclosed in JP 2013067304 A and JP H0492791 A are each provided with one tandem footrest, on which the foot of the passenger is placed, on a right side surface of the scooter and one tandem footrest on a left side surface of the scooter. Therefore, it may be difficult for the passenger to place his/her foot on the tandem footrest depending on the physical size of the passenger. For example, it may be difficult for a small person or a large person to place his/her foot on the tandem footrest if the tandem footrest is set in accordance with an average physical size.

Without being limited to this, it may be difficult for the passenger to place his/her foot on the tandem footrest depending on a sitting position of the driver. For example, if the sitting position of the driver is more rearward than usual, the passenger will be required to widen his/her legs more or will be required to move rearward the position at which the passenger sits. In the latter case, sometimes the passenger must place the foot on the tandem footrest in a cramped posture in which his/her knees are excessively straightened.

In the pillion step disclosed in JP 2013067304 A, a range within which the foot of the passenger is placed is narrow both in a front-rear direction and in a vehicle width direction. On the other hand, in the rear footrest board disclosed in JP H0492791 A, a range within which the foot of the passenger is placed is comparatively wide in the front-rear direction. However, in the rear footrest board disclosed in JP H0492791 A, its width becomes smaller as a rear end of the rear footrest board is approached. Therefore, it is difficult for the passenger to place the foot on a rear portion of the rear footrest board. Additionally, in this case, legs of the passenger become close to the exterior cover, and therefore how to place the foot on the rear footrest board may be restricted by the exterior cover. If the width of the rear footrest board is widened in order to avoid this, the scooter will be enlarged in the width direction.

Therefore, in the scooters disclosed in JP 2013067304 A and JP H0492791 A, the passenger sometimes cannot place his/her foot on the tandem footrest in a comfortable posture depending on the physical size of the passenger or depending on the sitting position of the driver.

It is therefore an object of the present invention to provide a straddled vehicle enabling a passenger to have high comfort. According to the present invention said object is achieved by a straddled vehicle according to claim 1. Preferred embodiments are laid down in the dependent claims.

A preferred embodiment provides a straddled vehicle including a driver seat on which a driver sits, a tandem seat that is disposed behind the driver seat in a plan view and on which a passenger sits, a front footrest on which a foot of the driver sitting on the driver seat is placed, an upper footrest that is disposed farther to the rear than the front footrest and on which a foot of the passenger sitting on the tandem seat is placed, a lower footrest that is disposed at a position farther to the rear than the front footrest and lower than the upper footrest and on which the foot of the passenger sitting on the tandem seat is placed, and an exterior cover including a side surface that includes a ceiling portion at least a portion of which is disposed above the lower footrest, the ceiling portion facing the lower footrest in an up-down direction, wherein, in a predetermined cross section of the ceiling portion along a vertical plane that perpendicularly intersects a front-rear direction, an upper end of the ceiling portion is disposed above an upper end of the lower footrest, and a lower end of the ceiling portion is disposed farther inward than the upper end of the ceiling portion in a vehicle width direction, and at least a portion of the lower footrest is disposed at a position farther inward than the upper end of the ceiling portion in the vehicle width direction and farther outward than the lower end of the ceiling portion in the vehicle width direction.

According to this configuration, the foot of the driver sitting on the driver seat (in detail, the footwear of the driver) is placed on the front footrest. The foot of the passenger sitting on the tandem seat (in detail, the footwear of the passenger) is placed on the upper footrest or on the lower footrest. In other words, the passenger is able to select a position at which the foot is placed from the upper footrest and the lower footrest. The upper footrest and the lower footrest are disposed at mutually different heights. For example, the foot of the passenger would be placed on the upper footrest when a small person sits on the tandem seat or when the sitting position of the driver is more rearward than usual. Therefore, it is possible for the passenger to place the foot on the upper footrest or on the lower footrest in a comfortable posture regardless of the physical size of the passenger or regardless of the sitting position of the driver.

For example, the foot of the passenger would be placed on the lower footrest when a person of average stature or of large stature sits on the tandem seat. In this case, the foot of the passenger is disposed between the ceiling portion of the exterior cover and the lower footrest. In a cross section of the ceiling portion (hereinafter referred to as a "predetermined cross section" if necessary) that is perpendicular to the front-rear direction and that is along a vertical plane passing through the lower footrest, the upper end of the ceiling portion is disposed farther outward than the inner end of the lower footrest in the vehicle width direction. Therefore, the ankle of the passenger whose foot is placed on the lower footrest is disposed near the upper end of the ceiling portion in the vehicle width direction.

On the other hand, in the predetermined cross section of the ceiling portion, the lower end of the ceiling portion is disposed farther inward than the upper end of the ceiling portion in the vehicle width direction. Therefore, in the predetermined cross section of the ceiling portion, the ceiling portion extends inward in the vehicle width direction toward the lower end of the ceiling portion. Human medial malleolus protrudes inward from the ankle. Therefore, the ceiling portion recedes inward from the medial malleolus of the passenger in the vehicle width direction as the lower end of the ceiling portion is approached.

As thus described, in the predetermined cross section of the ceiling portion, the upper end of the ceiling portion is disposed near the ankle of the passenger whose foot is placed on the lower footrest, whereas the ceiling portion recedes inward from the medial malleolus of the passenger in the vehicle width direction as the lower end of the ceiling portion is approached. The medial malleolus of the passenger enters a space under the ceiling portion depending on how to place the foot on the lower footrest. Therefore, how to place the foot of the passenger on the lower footrest is not easily restricted by the ceiling portion.

Additionally, the ceiling portion is concaved inward in the vehicle width direction, and therefore the heel of the passenger does not easily come into contact with the ceiling portion even if the position of the foot with respect to the lower footrest is more inward than usual. Therefore, a range within which the foot is able to be placed on the lower footrest is widened in the vehicle width direction. In other words, the passenger is able not only to select a position at which the foot is placed from the upper footrest and the lower footrest but also to move this position in the vehicle width direction within the range of the lower footrest. From these reasons, it is possible to make the comfort of the passenger even higher.

The straddled vehicle further includes an intermediate footrest that extends rearward from the front footrest to the upper footrest and on which the foot of the driver or of the passenger is placed.

According to this configuration, the intermediate footrest is provided in addition to the front footrest, the upper footrest, and the lower footrest. The intermediate footrest extends rearward from the front footrest. Therefore, the driver sitting on the driver seat is able to select a position at which the foot is placed from the front footrest and the intermediate footrest, and a range within which the foot of the driver is able to be placed is widened in the front-rear direction. Additionally, the intermediate footrest extends forward from the upper footrest. Therefore, the passenger sitting on the tandem seat is able to select a position at which the foot is placed from among the upper footrest, the lower footrest, and the intermediate footrest, and a range within which the foot of the passenger is able to be placed is widened in the front-rear direction.

In the present preferred embodiment, at least one of the following features may be added to the straddled vehicle.

The straddled vehicle further includes a rear wheel including a tire that rolls on a road surface and a wheel surrounded by the tire and an engine that rotates the rear wheel, wherein any portion of the intermediate footrest is disposed farther to the rear than a front end of the driver seat, and a rear end of the intermediate footrest is disposed at a position higher than an upper end of the wheel of the rear wheel and farther to the front than a rotation axis of the engine in a side view.

According to this configuration, the intermediate footrest is disposed farther to the rear than the front end of the driver seat that corresponds to the front end of the seat. Therefore, the underside of the foot is easily directed rearward when the driver places the foot on the intermediate footrest. On the other hand, the rear end of the intermediate footrest is disposed above the upper end of the wheel of the rear wheel in a side view, and is disposed farther to the front than the rotation axis of the engine. In other words, the rear end of the intermediate footrest is disposed not only at a comparatively forward position but also at a comparatively high position. Therefore, the intermediate footrest is obliquely inclined at a comparatively great angle with respect to a horizontal plane. When the underside of the foot of the driver is directed rearward, the driver is able to easily place the foot on the intermediate footrest if the inclination angle of the intermediate footrest is great. Therefore, it is possible to improve the comfort of the driver.

The exterior cover includes a side cover at least a portion of which is disposed over the upper footrest in a side view, and an outer end of the upper footrest in the vehicle width direction is disposed at a position lower than an outer end of the side cover in the vehicle width direction and farther outward in the vehicle width direction than the outer end of the side cover, and an inner end of the upper footrest in the vehicle width direction is disposed at a position lower than the outer end of the side cover and farther inward in the vehicle width direction than the outer end of the side cover.

According to this configuration, the outer end of the upper footrest and the inner end of the upper footrest are disposed below the outer end of the side cover. The outer end of the upper footrest is disposed farther outward than the outer end of the side cover in the vehicle width direction, whereas the inner end of the upper footrest is disposed farther inward than the outer end of the side cover in the vehicle width direction. Therefore, it is possible to increase the width of the upper footrest in the vehicle width direction while minimizing or preventing an increase in width of the straddled vehicle.

The straddled vehicle further includes an engine, wherein a rear end of the upper footrest and a rear end of the lower footrest are disposed farther to the front than a rotation axis of the engine.

According to this configuration, the rear end of the upper footrest and the rear end of the lower footrest are disposed farther to the front than the rotation axis of the engine. Therefore, the passenger sitting on the tandem seat is able to place the foot on either one of the upper footrest and the lower footrest in a comfortable posture in which the knee of the passenger is straightened. Additionally, the lower footrest is disposed not only at a lower position than the upper footrest but also at a more forward position than the rotation axis of the engine, and therefore the distance from the tandem seat to the lower footrest increases. Therefore, the passenger is able to place the foot on the lower footrest in a comfortable posture in which the knee is straightened even when a large person sits on the tandem seat.

The straddled vehicle further includes an engine, wherein a lower end of the lower footrest is disposed above a rotation axis of the engine.

According to this configuration, the lower end of the lower footrest is disposed above the rotation axis of the engine. Therefore, the lower end of the upper footrest is also disposed above the rotation axis of the engine. As thus described, the upper footrest and the lower footrest are disposed at a comparatively high position, hence enabling the passenger sitting on the tandem seat to place his/her foot on either one of the upper and lower footrests without extremely straighten his/her knee.

The upper footrest is shorter than the lower footrest in the vehicle width direction.

According to this configuration, the width of the upper footrest is smaller than the width of the lower footrest. In other words, the length of the upper footrest in the vehicle width direction is shorter than the length of the lower footrest in the vehicle width direction. It is conceivable that the foot of a small person would be placed on the upper footrest. A person of small stature is smaller in foot width than a person of average stature or a large person in many cases. Therefore, the passenger is able to place the foot on the upper footrest even if the upper footrest is shorter than the lower footrest in the vehicle width direction. Therefore, it is possible to minimize or prevent an increase in width of the straddled vehicle while maintaining the comfort of the passenger.

The straddled vehicle further includes a storage box into which an article is put, that is disposed under the driver seat, and that is opened and closed by the driver seat, wherein the upper footrest is disposed farther outward than the storage box in the vehicle width direction, and overlaps the storage box in a side view, and an upper end of the lower footrest is disposed farther outward than the storage box in the vehicle width direction and disposed below a lower end of the storage box.

According to this configuration, the upper footrest and the lower footrest are disposed not only at mutually different heights but also with a sufficient distance therebetween in the up-down direction. In other words, the upper footrest overlaps the storage box in a side view, whereas the lower footrest is disposed below the storage box, and does not overlap the storage box in a side view. As thus described, the upper footrest and the lower footrest are sufficiently away from each other in the up-down direction, and therefore the passenger is able to comfortably place the foot on the upper footrest or on the lower footrest regardless of the physical size of the passenger or regardless of a sitting position of the driver.

At least a portion of the upper footrest is disposed above the ceiling portion, and overlaps the ceiling portion in a plan view.

According to this configuration, the ceiling portion overlaps both the upper footrest and the lower footrest in a plan view. In other words, at least a portion of the ceiling portion is disposed above the lower footrest, and overlaps the lower footrest in a plan view. At least a portion of the upper footrest is disposed above the ceiling portion, and overlaps the ceiling portion in a plan view. The employment of this layout makes it possible to minimize or prevent an increase in width of the straddled vehicle.

In the predetermined cross section of the ceiling portion, a distance in an up-down direction from the upper end of the ceiling portion to the lower end of the ceiling portion is longer than a distance in the up-down direction from the lower end of the ceiling portion to the upper end of the lower footrest, and, in the predetermined cross section of the ceiling portion, a distance in the vehicle width direction from the upper end of the ceiling portion to the lower end of the ceiling portion is longer than the distance in the up-down direction from the lower end of the ceiling portion to the upper end of the lower footrest.

According to this configuration, the distance in the up-down direction from the upper end of the ceiling portion to the lower end of the ceiling portion is relatively long. Therefore, the upper end of the ceiling portion is sufficiently away upward from the lower footrest. On the other hand, the distance in the up-down direction from the lower end of the ceiling portion to the upper end of the lower footrest is relatively short. Therefore, the lower end of the ceiling portion is disposed near the lower footrest with respect to the up-down direction. In this layout, the medial malleolus of the passenger whose foot is placed on the lower footrest is easily disposed at a height between the upper end of the ceiling portion and the lower end of the ceiling portion.

Additionally, in comparison with the distance in the up-down direction from the lower end of the ceiling portion to the upper end of the lower footrest, the distance in the vehicle width direction from the upper end of the ceiling portion to the lower end of the ceiling portion is relatively long. In other words, the ceiling portion is largely concaved inward in the vehicle width direction, and a comparatively large space is secured below the ceiling portion. Therefore, the heel of the passenger whose foot is placed on the lower footrest is not easily brought into contact with the ceiling portion, and the position of the foot of the passenger with respect to the lower footrest is not easily restricted by the ceiling portion. Therefore, it is possible to make the comfort of the passenger even higher.

The above and other elements, features, steps, characteristics, and advantages of the present invention will become more apparent from the following detailed description of the preferred embodiments with reference to the attached drawings.

### BRIEF DESCRIPTION OF THE DRAWINGS

Fig. 1A is a left side view of a straddled vehicle according to a preferred embodiment.
Fig. 1B is a left side view of the straddled vehicle.
Fig. 2 is a plan view of the straddled vehicle.
Fig. 3 is a left side view of a portion of the straddled vehicle including a foot board.
Fig. 4 is a plan view of a portion of the straddled vehicle including the foot board.
Fig. 5 is an enlarged view of a portion of Fig. 3.
Fig. 6 is an enlarged view of a portion of Fig. 4.
Fig. 7 is a cross-sectional view showing a vertical cross section of an intermediate footrest along line VII-VII shown in Fig. 5.
Fig. 8 is a cross-sectional view showing a vertical cross section of an upper footrest along line VIII-VIII shown in Fig. 5.
Fig. 9 is an enlarged view of a portion of Fig. 8.
Fig. 10 is a rear view of a portion of the straddled vehicle showing a state in which the lower footrest is disposed in a use position.
Fig. 11 is a rear view of the portion of the straddled vehicle showing a state in which the lower footrest is disposed in a non-use position.
Fig. 12 is a cross-sectional view for describing a positional relationship between the foot placed on the lower footrest and a ceiling portion of an exterior cover.

### DETAILED DESCRIPTION OF PREFERRED EMBODIMENTS

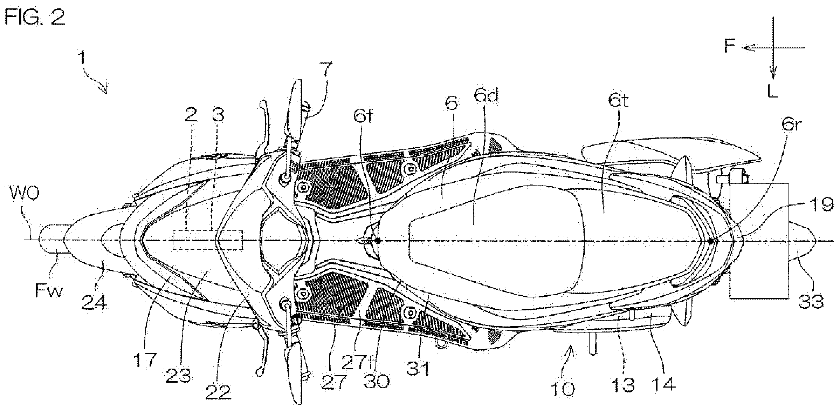

A straddled vehicle 1 in a reference posture placed on a horizontal road surface will be hereinafter described unless specific notice is given. The reference posture is a posture in which a person does not ride the straddled vehicle 1 and a steering handle 7 is disposed at a straight-traveling position (a position of the steering handle 7 shown in Fig. 2) at which the straddled vehicle 1 travels straight and a rotational center of a rear wheel Rw is horizontal.

Front-rear, up-down, and right-left directions in the following description are defined based on the straddled vehicle 1 in the reference posture unless specific notice is given. The right-left direction corresponds to a vehicle width direction. A vehicle center WO corresponds to a vertical plane that passes through a center line of a head pipe 3 and that is perpendicular to the rotational center of the rear wheel Rw. A plan view, a side view and a rear view in the following description represent a plan view, a side view and a rear view of the straddled vehicle 1, respectively unless specific notice is given. The term "upper end" in the following description represents an uppermost portion of a member. That is, the term "upper end" represents an uppermost end. The same applies to the lower end, front end, rear end, right end, left end, outer end, and inner end.

First, the fundamental configuration of the straddled vehicle 1 will be described.

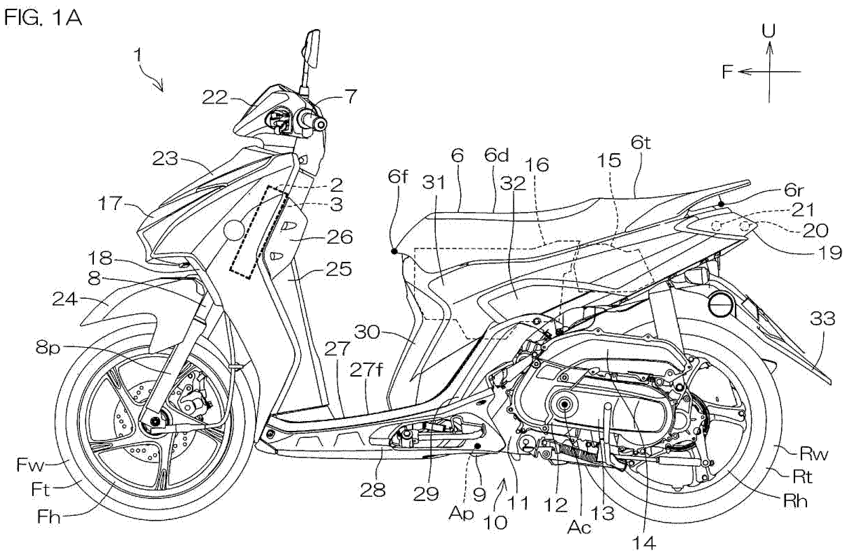

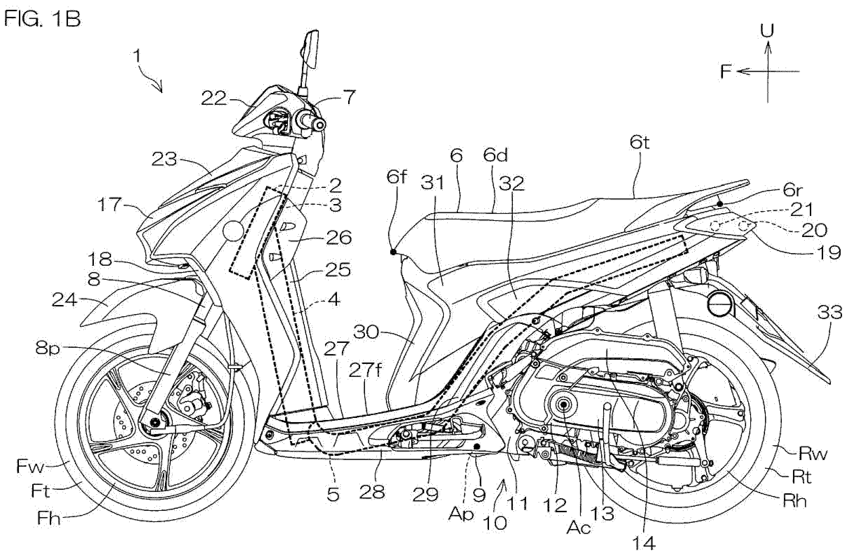

Fig. 1A and Fig. 1B are left side views of the straddled vehicle 1 according to a preferred embodiment. Fig. 2 is a plan view of the straddled vehicle 1. An arrow U and an arrow F in Fig. 1A and Fig. 1B represent an upper direction and a front direction of the straddled vehicle 1, respectively. An arrow L in Fig 2 represents a left direction of the straddled vehicle 1. The same applies to other figures.

As shown in Fig. 1A, the straddled vehicle 1 is a scooter, for example. The straddled vehicle 1 includes a frame 2 covered with an exterior cover and a front wheel Fw and a rear wheel Rw attached to the frame 2. The front wheel Fw is attached to the frame 2 via a front fork 8 described below. The rear wheel Rw is attached to the frame 2 via a swing unit 10 described below. The front wheel Fw includes a rubber tire Ft that rolls on the road surface and a metal wheel Fh surrounded by the tire Ft. Similarly, the rear wheel Rw includes a rubber tire Rt that rolls on the road surface and a metal wheel Rh surrounded by the tire Rt.

The frame 2 includes the head pipe 3 extending obliquely rearward and upward. As shown in Fig. 1B, the frame 2 further includes a down frame 4 extending obliquely rearward and downward from the head pipe 3, and a pair of lower frames 5 extending obliquely rearward and upward from the down frame 4. The pair of lower frames 5 overlap each other in a side view. Front ends of the pair of lower frames 5 are disposed below the head pipe 3.

As shown in Fig. 1A, the straddled vehicle 1 includes a saddle type seat 6 on which a rider sits. A front end 6f of the seat 6 is disposed farther to the rear than the head pipe 3. The seat 6 may be for one person or may be for two persons. Fig. 1A shows an example of the later. In this example, the seat 6 includes a driver seat 6d on which a driver sits and a tandem seat 6t on which a passenger sits. The tandem seat 6t may be integral with the driver seat 6d or may be a seat separate from the driver seat 6d. The tandem seat 6t extends rearward from the driver seat 6d. The tandem seat 6t is disposed behind the driver seat 6d in a plan view.

The straddled vehicle 1 includes the steering handle 7 to be operated by a driver, and the front fork 8 supporting rotatably the front wheel Fw. The front fork 8, which is an example of a front wheel supporting member, includes a pair of fork pipes 8p disposed on the right side and the left side of the front wheel Fw, respectively, and a steering shaft inserted in the head pipe 3. The steering shaft protrudes upward from an upper end portion of the head pipe 3. The steering handle 7 is connected to an upper end portion of the steering shaft. The steering handle 7 is disposed over the head pipe 3. When the steering handle 7 is operated, the front wheel Fw turns rightward and leftward around the center line of the head pipe 3 together with the steering handle 7 and the front fork 8. Thus, the straddled vehicle 1 is steered.

The straddled vehicle 1 includes the swing unit 10 that is swingable upward and downward with respect to the frame 2. The swing unit 10 is an example of a power unit to cause the straddled vehicle 1 to travel. The swing unit 10 includes an engine 11 that rotates the rear wheel Rw and a transmission mechanism 12 that transmits the power of the engine 11 to the rear wheel Rw. The engine 11 is attached to the frame 2 via an anti-vibration link 9. The transmission mechanism 12 extends rearward from the engine 11. The rear wheel Rw is disposed on the right side of the transmission mechanism 12. The rear wheel Rw is rotatably supported by the transmission mechanism 12. The rear wheel Rw and the swing unit 10 are upward and downward swingable with respect to the frame 2 about a horizontal pivot axis Ap passing through the anti-vibration link 9 in the vehicle width direction.

The engine 11 includes a piston that reciprocates in accordance with the combustion of air-fuel mixture containing air and fuel and a crank shaft that rotates in accordance with the reciprocation of the piston about a horizontal rotation axis Ac extending in the vehicle width direction. The engine 11 further includes a cylinder that houses the piston therein, and a crank case that houses the crank shaft therein. The crank shaft is disposed at a position farther to the rear than a rear end of the front wheel Fw (It corresponds to a rear end of the tire Ft of the front wheel Fw. The same applies hereinafter.) and farther to the front than a front end of the rear wheel Rw (It corresponds to a front end of the tire Rt of the rear wheel Rw. The same applies hereinafter.). The rotation of the crank shaft is transmitted to the rear wheel Rw via the transmission mechanism 12. The transmission mechanism 12 includes a transmission (a CVT (Continuously Variable Transmission), for example) that transmits a rotation, which is transmitted from the engine 11, toward the rear wheel Rw while changing a speed of the rotation, and a transmission case that houses the transmission therein.

The straddled vehicle 1 includes a fuel tank 15 storing fuel to be supplied to the engine 11 and an air cleaner box 14 housing an element that removes foreign matter from air to be supplied to the engine 11. The air cleaner box 14 is disposed over the transmission case 13. The fuel tank 15 is disposed over the air cleaner box 14 in a side view. The fuel tank 15 is disposed under the seat 6. The fuel tank 15 is disposed behind a storage box 16 described below. The fuel tank 15 may be disposed under a foot board 27 described below.

The straddled vehicle 1 includes the storage box 16 in which an article such as a helmet is put. The article is put in the storage box 16 through an opening provided in an upper end portion of the storage box 16. The seat 6 is disposed over the storage box 16. The opening of the storage box 16 is opened and closed by the seat 6. The seat 6 is connected to the storage box 16 via a seat hinge. The seat 6 is turnable upward and downward with respect to the storage box 16. Fig. 1A shows a state in which the seat 6 is disposed at a closed position in which the opening of the storage box 16 is closed by the seat 6.

The straddled vehicle 1 includes a head lamp 17 that emits light forward and two front flashers 18 that flash in response to an operation by a driver. The straddled vehicle 1 further includes a tail lamp 20 that emits light rearward and two rear flashers 21 that flash in response to an operation by a driver. Fig. 1A shows an example in which the tail lamp 20 and the two rear flashers 21 are included in a rear lamp 19. The head lamp 17 and the front flashers 18 are disposed farther to the front than the front end 6f of the seat 6. The tail lamp 20 and the rear flashers 21 are disposed farther to the rear than the front end of the rear wheel Rw.

The straddled vehicle 1 includes the exterior cover forming an outer surface of the straddled vehicle 1. The exterior cover includes a handle cover 22 disposed in front of and behind the steering handle 7, a front cover 23 disposed in front of the head pipe 3, and a front fender 24 disposed over the front wheel Fw. The handle cover 22 turns rightward and leftward together with the steering handle 7. The front fender 24 turns rightward and leftward together with the front fork 8. When a driver moves the steering handle 7 rightward and leftward, the handle cover 22, the front fender 24, the front fork 8 and the front wheel Fw move rightward and leftward together with the steering handle 7.

The exterior cover further includes a leg shield 25 disposed in front of both legs of a driver sitting on the seat 6, and the foot board 27 on which both feet of the driver sitting on the seat 6 are placed. The foot board 27 is disposed below the front end 6f of the seat 6. The leg shield 25 extends upward from a front end portion of the foot board 27. The leg shield 25 is disposed farther to the front than the front end 6f of the seat 6. The leg shield 25 faces both legs of the driver sitting on the seat 6 in the front-rear direction. The leg shield 25 is disposed behind the front cover 23. The head pipe 3 is disposed between the front cover 23 and the leg shield 25 in the front-rear direction.

An upper surface of the foot board 27 includes a flat portion 27f that is flat from its right end to its left end. When the flat portion 27f is cut by a flat surface perpendicular to the front-rear direction, any portion of the flat portion 27f is disposed on a horizontal straight line extending in the vehicle width direction. In other words, a cross-section of the flat portion 27f taken along a flat surface perpendicular to the front-rear direction extends linearly in the vehicle width direction from a right end of the cross-section to a left end of the cross-section. The flat portion 27f may be a smooth and flat surface without unevenness or may be a substantially flat surface including recessed portions or convex portions that cannot affect placing feet thereon (e.g., recessed portions or convex portions within a range from 2 mm to 1 cm).

The exterior cover includes the pocket cover 26 forming together with the leg shield 25 a storage space in which an article is put. The pocket cover 26 is disposed farther to the front than the front end 6f of the seat 6. The pocket cover 26 is disposed behind the leg shield 25. The pocket cover 26 is attached to the leg shield 25. The storage space is formed between the leg shield 25 and the pocket cover 26 in the front-rear direction. The storage space extends downward from a take-in/take-out port formed between the leg shield 25 and the pocket cover 26 in the front-rear direction. An article is taken in or out from the storage space through the take-in/take-out port.

The exterior cover includes an under cover disposed under the foot board 27. The under cover includes a lower under cover 28 disposed under the foot board 27, and a pair of rear under covers 29 disposed under the foot board 27 and disposed behind the foot board 27. As shown in Fig. 1B, the pair of lower frames 5 are disposed between the foot board 27 and the lower under cover 28 in the up-down direction. The pair of rear under covers 29 are disposed on the right side and the left side of the pair of lower frames 5, respectively. The rear under cover 29 is disposed farther outward than the engine 11 in the vehicle width direction and overlaps the engine 11 in a side view.

The exterior cover includes a middle cover 30 disposed in front of the storage box 16, and a pair of side covers disposed on the right side and the left side of the storage box 16. The side cover includes an upper side cover 31 disposed under the seat 6 in a side view and a lower side cover 32 disposed under the upper side cover 31 in a side view. The upper side cover 31 and the lower side cover 32 are disposed outward of the storage box 16 in the vehicle width direction and overlap the storage box 16 in a side view.

The middle cover 30 extends upward from the foot board 27. The middle cover 30 is disposed under the seat 6. The middle cover 30 is disposed behind the leg shield 25 and faces the leg shield 25 in the front-rear direction. In a side view, the upper side cover 31 is disposed behind the middle cover 30. In a side view, the lower side cover 32 is disposed behind the upper side cover 31.

The exterior cover includes a rear fender 33 disposed in front of and behind the rear wheel Rw. The rear fender 33 includes a front board disposed over the rear wheel Rw, and a rear board extends obliquely rearward and downward from the front board. The front board is attached to the frame 2. The rear board is supported by the frame 2 via the front board. The front board and the rear board are disposed above the rear wheel Rw and overlap the rear wheel Rw in a plan view. In a side view, a rear end of the rear board, which corresponds to a rear end of the rear fender 33, is disposed farther to the rear than a rear end of the rear wheel Rw (It corresponds to a rear end of the tire Rt of the rear wheel Rw. The same applies hereinafter.). In a side view, the rear end of the rear board is disposed farther to the rear than a rear end 6r of the seat 6.

Next, a description will be given of a footrest on which the feet of a driver and of a passenger are placed.

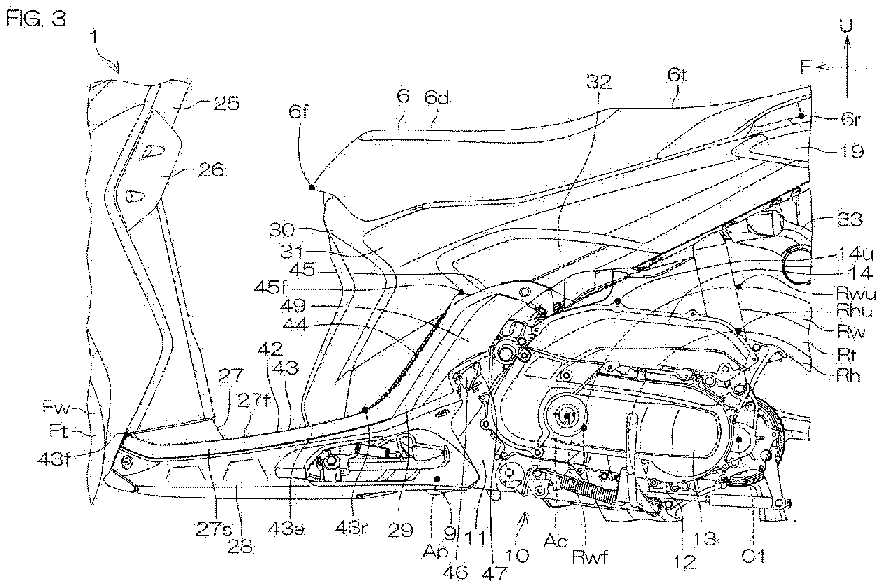

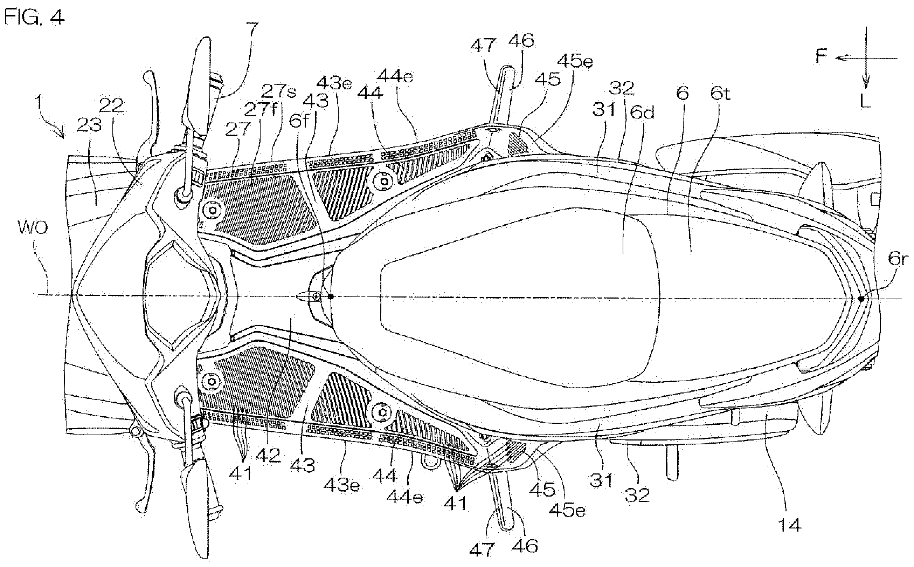

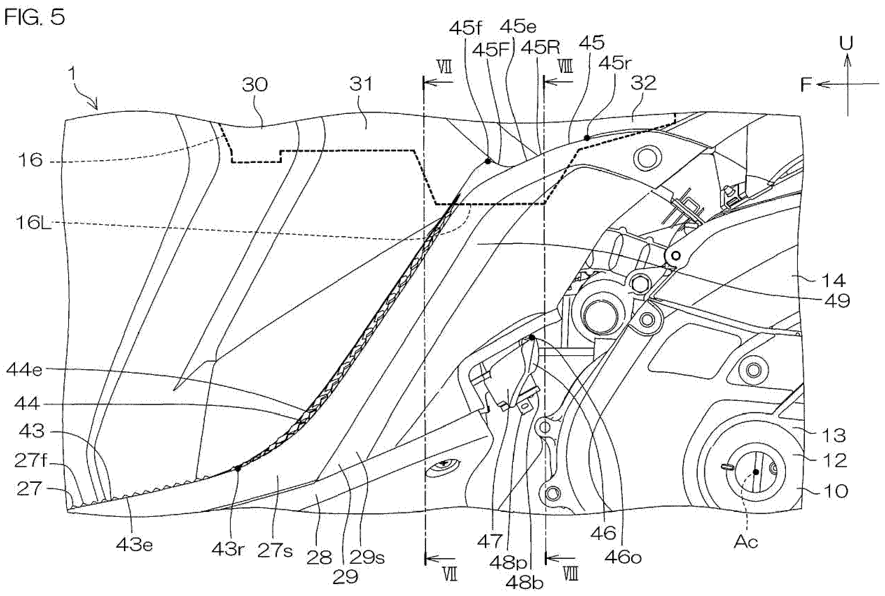

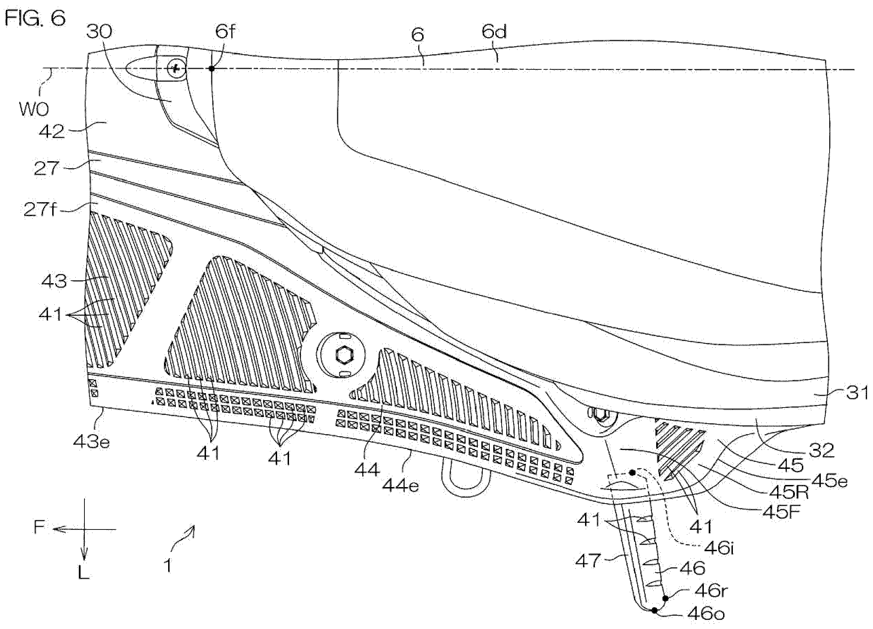

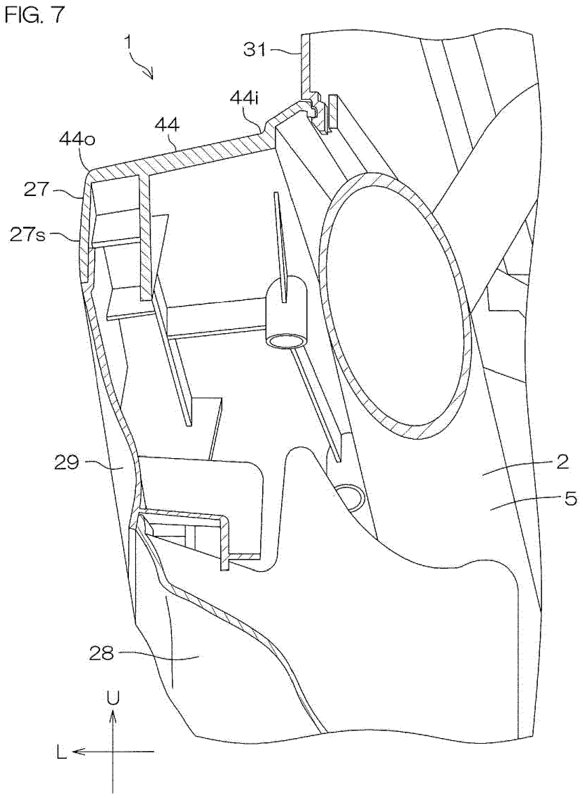

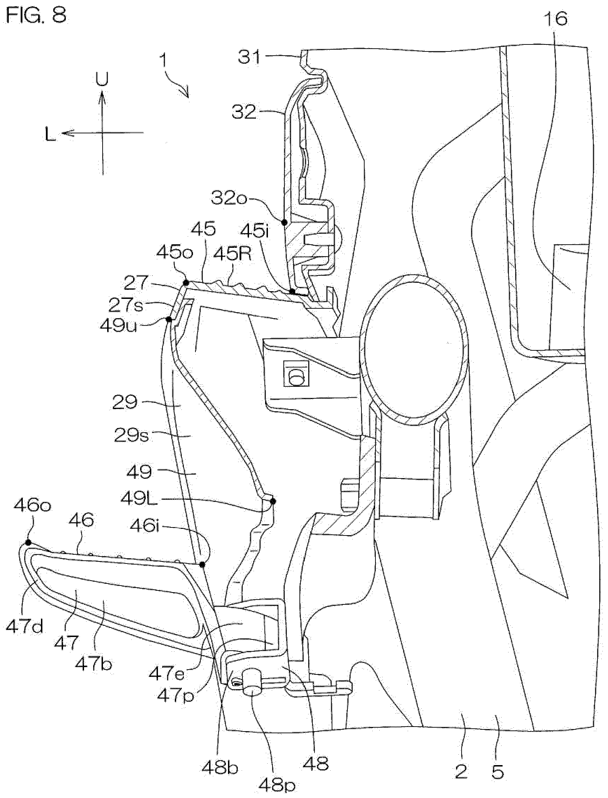

Fig. 3 and Fig. 4 are respectively a left side view and a plan view of a portion of the straddled vehicle 1 including the foot board 27. Fig. 5 is an enlarged view of a portion of Fig. 3. Fig. 6 is an enlarged view of a portion of Fig. 4. Fig. 7 is a cross-sectional view showing a vertical cross section of an intermediate footrest 44 along line VII-VII shown in Fig. 5. Fig. 8 is a cross-sectional view showing a vertical cross section of an upper footrest 45 along line VIII-VIII shown in Fig. 5.

As shown in Fig. 3, an upper surface of the foot board 27 includes a flat portion 27f that is flat from its right end to its left end. As shown in Fig. 4, the flat portion 27f includes a pair of front footrests 43 on which the feet of the driver are placed and a central footrest 42 positioned between the pair of front footrests 43 in the vehicle width direction. The pair of front footrests 43 are disposed at a mutually equal height. The central footrest 42 is disposed at a height equal to that of the pair of front footrests 43. A side surface 27s of the foot board 27 extends downward from an outer edge 43e of the front footrest 43. The driver is able to place his/her foot not only on the front footrest 43 but also on the central footrest 42.

The upper surface of the foot board 27 includes, in addition to the pair of front footrests 43, a pair of intermediate footrests 44 on which the feet of the driver are placed and a pair of upper footrests 45 on which the feet of the passenger are placed. The straddled vehicle 1 includes a pair of footrest bars 47 that are collapsible. Each of the footrest bars 47 includes a lower footrest 46 on which the foot of the passenger is placed. The front footrest 43, the intermediate footrest 44, the upper footrest 45, and the lower footrest 46 are hereinafter collectively referred to as the footrests 43 to 46 if necessary.

The pair of front footrests 43 are disposed on the right side and the left side of the vehicle center WO, respectively. The same applies to the pair of intermediate footrests 44, to the pair of upper footrests 45, and to the pair of footrest bars 47. A right foot of the driver is put on the right-side front footrest 43 or is put on the right-side intermediate footrest 44. A left foot of the driver is put on the left-side front footrest 43 or is put on the left-side intermediate footrest 44. Similarly, a right foot of the passenger is put on the right-side upper footrest 45 or is put on the right-side lower footrest 46. A left foot of the passenger is put on the left-side upper footrest 45 or is put on the left-side lower footrest 46.

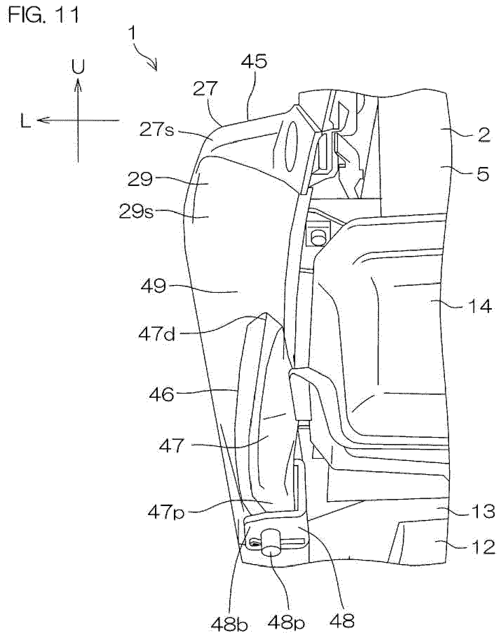

The front footrest 43 and the intermediate footrest 44 are a portion of the foot board 27. The upper footrest 45 may be a portion of the exterior cover, such as a portion of the foot board 27, or may be a portion of the collapsible footrest bar. The same applies to the lower footrest 46. Fig. 4 shows an example in which the upper footrest 45 is a portion of the foot board 27, and the lower footrest 46 is a portion of the footrest bar 47. The footrest bar 47 is movable between the use position (position shown in Figs. 3 and 4) and the non-use position (position shown in Fig. 11). The footrest bar 47 described hereinafter is in the use position unless specific notice is given.

Each of the footrests 43 to 46 may be a smooth and flat surface without unevenness or may be a substantially flat surface including recessed portions or convex portions that cannot affect placing feet thereon (e.g., recessed portions or convex portions within a range from 2 mm to 1 cm). Fig. 4 shows an example in which a plurality of convex portions 41 to minimize or prevent foot slipping are disposed at the front footrest 43, at the intermediate footrest 44, at the upper footrest 45, and at the lower footrest 46.

As shown in Fig. 6, the convex portions 41 are regularly disposed with intervals between the convex portions 41. The convex portion 41 may be straight or curved, or may be circular or elliptic. Fig. 6 shows an example in which straight convex portions and curved convex portions are disposed. The cross section of the convex portion along a vertical plane is, for example, trapezoidal or semicircular. In each convex portion, the amount of protrusion of the convex portion from the surface of the footrest is equal or substantially equal. The surface of the footrest and the tops of the convex portions 41 form a substantial flat surface. The foot of the driver or of the passenger comes into contact with the tops of the convex portions 41.

As shown in Fig. 3, the front footrest 43 is disposed between the front wheel Fw and the rear wheel Rw in the front-rear direction in a side view. The front footrest 43 extends obliquely rearward and upward in a side view. The front footrest 43 may be horizontal from a front end 43f of the front footrest 43 to a rear end 43r of the front footrest 43, or may include a horizontal portion and an obliquely inclined portion with respect to a horizontal plane.

Any portion of the front footrest 43 is disposed below the front end 6f of the seat 6 in a side view. Any portion of the front footrest 43 is disposed below an upper end Rwu of the rear wheel Rw (which corresponds to an upper end of the tire Rt of the rear wheel Rw. The same applies hereinafter.) in a side view. The front end 43f of the front footrest 43 is disposed below the rotation axis Ac of the engine 11 in a side view. The rear end 43r of the front footrest 43 is disposed at a height equal to or substantially equal to that of the rotation axis Ac of the engine 11 in a side view.

The front end 43f of the front footrest 43 is disposed farther to the front than the front end 6f of the seat 6 in a side view. The rear end 43r of the front footrest 43 is disposed farther to the rear than the front end 6f of the seat 6 in a side view. The rear end 43r of the front footrest 43 is disposed farther to the front than the rotation axis Ac of the engine 11 in a side view. The rear end 43r of the front footrest 43 is disposed farther to the front than the pivot axis Ap of the swing unit 10 in a side view.

As shown in Fig. 4, the pair of front footrests 43 are disposed below the handle cover 22, and overlap the handle cover 22 in a plan view. The central footrest 42 is disposed between the handle cover 22 and the seat 6 in the front-rear direction in a plan view. In a plan view, the outer edge 43e of the front footrest 43 extends outward in the vehicle width direction as the intermediate footrest 44 is approached. Therefore, an interval between the outer edges 43e of the pair of front footrests 43 in the vehicle width direction becomes wider as the intermediate footrest 44 is approached.

The seat 6 is disposed between the pair of intermediate footrests 44 in the vehicle width direction in a plan view. The right-side intermediate footrest 44 extends rearward from the right-side front footrest 43 in a plan view. The left-side intermediate footrest 44 extends rearward from the left-side front footrest 43 in a plan view. The side covers 31 and 32 are disposed between the intermediate footrest 44 and the seat 6 in the vehicle width direction in a plan view.

An outer edge 44e of the intermediate footrest 44 extends rearward from the outer edge 43e of the front footrest 43 in a plan view. In a plan view, the outer edge 44e of the intermediate footrest 44 extends outward in the vehicle width direction as the upper footrest 45 is approached. Therefore, an interval between the outer edges 44e of the pair of intermediate footrests 44 in the vehicle width direction becomes wider as the upper footrest 45 is approached. A maximum value of the interval between the outer edges 44e of the pair of intermediate footrests 44 in the vehicle width direction is larger than a maximum value of the interval between the outer edges 43e of the pair of front footrests 43 in the vehicle width direction.

As shown in Fig. 3, the intermediate footrest 44 extends obliquely rearward and upward from the front footrest 43 in a side view. The intermediate footrest 44 and the front footrest 43 form a circular arc in a side view, which is downward convex, at a connection portion between footrests 44 and 43. An inclination angle of the intermediate footrest 44 with respect to the horizontal plane is larger than an inclination angle of the front footrest 43 with respect to the horizontal plane. The intermediate footrest 44 is shorter in the front-rear direction than the front footrest 43. In other words, a distance in the front-rear direction from the front end of the intermediate footrest 44 to the rear end of the intermediate footrest 44 is shorter than a distance in the front-rear direction from the front end 43f of the front footrest 43 to the rear end 43r of the front footrest 43.

Any portion of the intermediate footrest 44 is disposed below the front end 6f of the seat 6 in a side view. Any portion of the intermediate footrest 44 is disposed above a rotational center C1 of the rear wheel Rw in a side view. Any portion of the intermediate footrest 44 is disposed farther to the rear than the front end 6f of the seat 6 in a side view. Any portion of the intermediate footrest 44 is disposed farther to the front than a front end Rwf of the rear wheel Rw in a side view. Any portion of the intermediate footrest 44 is disposed farther to the front than the rotation axis Ac of the engine 11 in a side view. The rear end of the intermediate footrest 44 is disposed farther to the rear than the pivot axis Ap of the swing unit 10 in a side view.

The front end of the intermediate footrest 44 corresponds to the rear end 43r of the front footrest 43. The rear end of the intermediate footrest 44 corresponds to a front end 45f of the upper footrest 45. The rear end of the intermediate footrest 44 is disposed above the front end of the intermediate footrest 44 in a side view. The rear end of the intermediate footrest 44 is disposed above the rotation axis Ac of the engine 11 in a side view. The rear end of the intermediate footrest 44 is disposed above an upper end Rhu of the wheel Rh of the rear wheel Rw in a side view. The rear end of the intermediate footrest 44 is disposed above an upper end 14u of the air cleaner box 14 in a side view. The rear end of the intermediate footrest 44 is disposed at a height equal to or substantially equal to that of the upper end Rwu of the rear wheel Rw in a side view.

Fig. 7 shows a cross section along a vertical plane that perpendicularly intersects the front-rear direction. In the cross section of Fig. 7, an inner end 44i of the intermediate footrest 44 is disposed above an outer end 44o of the intermediate footrest 44 and the intermediate footrest 44 extends obliquely upward toward the vehicle center WO (see Fig. 4). The inner end 44i of the intermediate footrest 44 may be disposed at a height equal to that of the outer end 44o of the intermediate footrest 44, or may be disposed below the outer end 44o of the intermediate footrest 44.

As shown in Fig. 4, the seat 6 is disposed between the pair of upper footrests 45 in the vehicle width direction in a plan view. The right-side upper footrest 45 extends rearward from the right-side intermediate footrest 44 in a plan view. The left-side upper footrest 45 extends rearward from the left-side intermediate footrest 44 in a plan view. An outer edge 45e of the upper footrest 45 extends rearward from the outer edge 44e of the intermediate footrest 44 in a plan view. The side covers 31 and 32 are disposed between the upper footrest 45 and the seat 6 in the vehicle width direction in a plan view.

As shown in Fig. 5, the upper footrest 45 includes a front rest portion 45F that extends obliquely rearward and downward from the intermediate footrest 44 in a side view and a rear rest portion 45R that extends obliquely rearward and upward from the front rest portion 45F in a side view. The intermediate footrest 44 and the front rest portion 45F form a convex portion, which protrudes upward in a side view, at a connection portion between the intermediate footrest 44 and the front rest portion 45F. The front rest portion 45F and the rear rest portion 45R form a concave portion, which is downward concaved in a side view, at a connection portion between the front rest portion 45F and the rear rest portion 45R. The inclination angle of the rear rest portion 45R with respect to a horizontal plane is smaller than the inclination angle of the intermediate footrest 44 with respect to the horizontal plane.

The inclination angle of the upper footrest 45 with respect to the horizontal plane varies at an area between the front end 45f of the upper footrest 45 and the rear end 45r of the upper footrest 45. The inclination angle of the upper footrest 45 with respect to the horizontal plane may be constant from the front end 45f of the upper footrest 45 to the rear end 45r of the upper footrest 45. In this case, the inclination angle of the upper footrest 45 with respect to the horizontal plane may be smaller than the inclination angle of the intermediate footrest 44 with respect to the horizontal plane. The upper footrest 45 may be entirely or partially horizontal. For example, the rear rest portion 45R may be horizontal.

The front end of the front rest portion 45F corresponds to the front end 45f of the upper footrest 45. The rear end 45r of the upper footrest 45 is disposed above the front end 45f of the upper footrest 45. The upper footrest 45 is shorter in the front-rear direction than the intermediate footrest 44. In other words, the distance in the front-rear direction from the front end 45f of the upper footrest 45 to the rear end 45r of the upper footrest 45 is shorter than the distance in the front-rear direction from the front end (which corresponds to the rear end 43r) of the intermediate footrest 44 to the rear end (which corresponds to the front end 45f) of the intermediate footrest 44.

Any portion of the upper footrest 45 is disposed farther to the front than the rotation axis Ac of the engine 11 in a side view. As shown in Fig. 3, any portion of the upper footrest 45 is disposed below the front end 6f of the seat 6 in a side view. Any portion of the upper footrest 45 is disposed above the upper end Rhu of the wheel Rh of the rear wheel Rw in a side view.

Fig. 8 shows a cross section along the vertical plane that perpendicularly intersects the front-rear direction. In the cross section of Fig. 8, an inner end 45i of the upper footrest 45 is disposed below an outer end 45o of the upper footrest 45. The upper footrest 45 extends obliquely downward toward the vehicle center WO (see Fig. 4). The inner end 45i of the upper footrest 45 may be disposed at a height equal to that of the outer end 45o of the upper footrest 45, or may be disposed above the outer end 45o of the upper footrest 45.

The upper footrest 45 protrudes outward from the lower side cover 32 in the vehicle width direction. The lower side cover 32 extends upward from the upper footrest 45. A portion of the lower side cover 32 is disposed over the upper footrest 45 in a side view. An outer end 32o of the lower side cover 32 corresponds to an outer end of the side covers 31 and 32. In the cross section of Fig. 8, any portion of the upper footrest 45 is disposed below the outer end 32o of the lower side cover 32. In the cross section of Fig. 8, the inner end 45i of the upper footrest 45 is disposed farther inward than the outer end 32o of the lower side cover 32 in the vehicle width direction, and the outer end 45o of the upper footrest 45 is disposed farther outward than the outer end 32o of the lower side cover 32 in the vehicle width direction. Therefore, the side covers 31 and 32 overlap the upper footrest 45 in a plan view.

As described above, the lower footrest 46 is a portion of the collapsible footrest bar 47. The footrest bar 47 is movable to and from the frame 2 between the use position and the non-use position. Fig. 8 shows a state in which the footrest bar 47 is disposed in the use position. The use position is a position in which a distal end portion 47d of the footrest bar 47 is disposed farther outward than a proximal end portion 47p of the footrest bar 47 in the vehicle width direction. The non-use position (i.e., position shown in Fig. 11) is a position in which the distal end portion 47d of the footrest bar 47 is disposed inward in the vehicle width direction as compared with a case in which the footrest bar 47 is disposed in the use position. The foot of the passenger is placed on the lower footrest 46 when the footrest bar 47 is disposed in the use position.

The footrest bar 47 is attached to the frame 2 by a hinge 48. The hinge 48 includes a bracket 48b fixed to the frame 2 and a pin 48p interposed between the bracket 48b and the footrest bar 47. The footrest bar 47 is rotatable around the pin 48p with respect to the frame 2. The pin 48p penetrates through the footrest bar 47. Both end portions of the pin 48p are supported by the bracket 48b. When the footrest bar 47 is rotated around the pin 48p, the footrest bar 47 comes into contact with the bracket 48b, and is stopped either in the use position or in the non-use position. The use position and the non-use position are positions of both ends of a range within which the footrest bar 47 is moved.

The footrest bar 47 includes a bar end 47e into which the pin 48p is inserted and a swing bar 47b extending outward from the bar end 47e in the vehicle width direction. The proximal end portion 47p is a portion of the bar end 47e. The distal end portion 47d is a portion of the swing bar 47b. The bar end 47e is disposed inside the bracket 48b. The swing bar 47b is disposed outside the bracket 48b. The lower footrest 46 is a portion of the swing bar 47b. Therefore, the foot of the passenger is placed on the swing bar 47b. At least a portion of the lower footrest 46 is visible in a plan view.

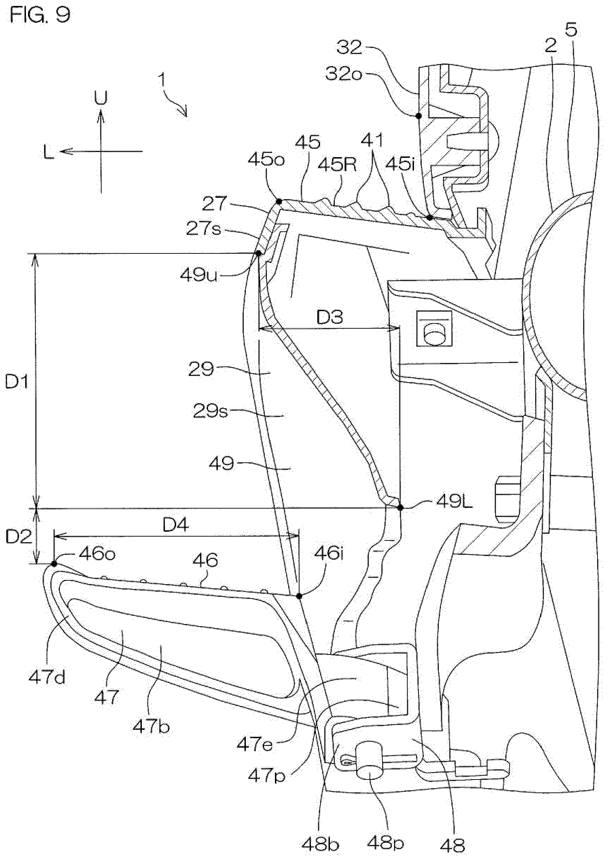

An outer end 46o of the lower footrest 46 corresponds to an upper end of the lower footrest 46. An inner end 46i of the lower footrest 46 corresponds to a lower end of the lower footrest 46. The outer end 46o of the lower footrest 46 and the upper end of the lower footrest 46 are not necessarily required to coincide with each other. Similarly, the inner end 46i of the lower footrest 46 and the lower end of the lower footrest 46 are not necessarily required to coincide with each other. The distance in the vehicle width direction (i.e., distance D4 shown in Fig. 9) from the outer end 46o of the lower footrest 46 to the inner end 46i of the lower footrest 46 is longer than the distance in the vehicle width direction from the outer end 45o of the upper footrest 45 to the inner end 45i of the upper footrest 45. In other words, the width of the lower footrest 46 is wider than the width of the upper footrest 45.

As shown in Fig. 4, the seat 6 is disposed between the pair of lower footrests 46 in the vehicle width direction in a plan view. The upper footrest 45 is disposed above the lower footrest 46, and overlaps the lower footrest 46 in a plan view (see Fig. 6). The right-side lower footrest 46 protrudes outward from the right-side upper footrest 45 in the vehicle width direction in a plan view. The left-side lower footrest 46 protrudes outward from the left-side upper footrest 45 in the vehicle width direction in a plan view. The upper footrest 45 is disposed between the lower footrest 46 and the side covers 31, 32 in the vehicle width direction in a plan view.

As shown in Fig. 3, any portion of the lower footrest 46 is disposed above the front footrest 43 in a side view. Any portion of the lower footrest 46 is disposed above the rotation axis Ac of the engine 11 in a side view. Any portion of the lower footrest 46 is disposed below the upper footrest 45 in a side view. Any portion of the lower footrest 46 is disposed below the upper end Rhu of the wheel Rh of the rear wheel Rw in a side view. Any portion of the lower footrest 46 is disposed at a position higher than the front end (which corresponds to the rear end 43r) of the intermediate footrest 44 in a side view and lower than the rear end (which corresponds to the front end 45f) of the intermediate footrest 44 in a side view.

Any portion of the lower footrest 46 is disposed farther to the rear than the front footrest 43 in a side view. Any portion of the lower footrest 46 is disposed farther to the rear than the pivot axis Ap of the swing unit 10 in a side view. Any portion of the lower footrest 46 is disposed farther to the front than the rotation axis Ac of the engine 11 in a side view. Any portion of the lower footrest 46 is disposed farther to the front than the rear end 45r of the upper footrest 45 in a side view (see Fig. 5). At least a portion of the lower footrest 46 is disposed at a position farther to the rear than the front end 45f of the upper footrest 45 in a side view and farther to the front than the rear end 45r of the upper footrest 45 in a side view.

As shown in Fig. 5, the upper footrest 45 is disposed farther outward than the storage box 16 in the vehicle width direction, and overlaps the storage box 16 in a side view. Similarly, the rear end (which corresponds to the front end 45f) of the intermediate footrest 44 is disposed farther outward than the storage box 16 in the vehicle width direction, and overlaps the storage box 16 in a side view. Any portion of the upper footrest 45 is disposed above a lower end 16L of the storage box 16 in a side view. On the other hand, any portion of the lower footrest 46 is disposed below the lower end 16L of the storage box 16 in a side view, and does not overlap the storage box 16 in a side view.

The rear under cover 29 of the exterior cover is disposed behind the intermediate footrest 44 in a side view. The rear under cover 29 is disposed below the upper footrest 45 in a side view. A portion of the rear under cover 29 is disposed between the intermediate footrest 44 and the lower footrest 46 in the front-rear direction in a side view. The lower footrest 46 overlaps the rear under cover 29 in a side view.

Next, a ceiling portion 49 of the exterior cover will be described.

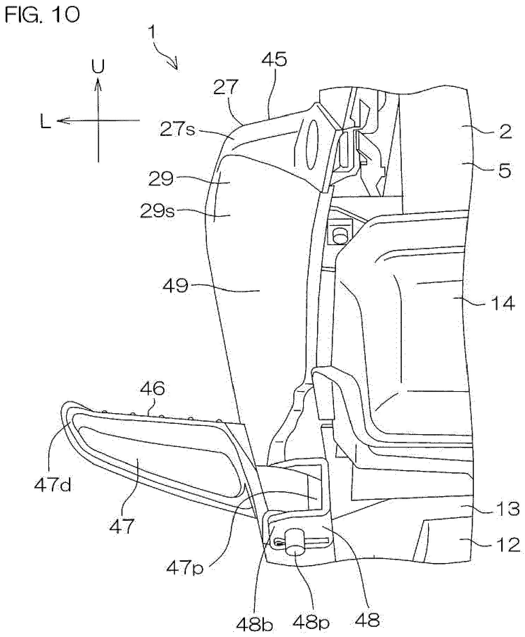

Fig. 9 is an enlarged view of a portion of Fig. 8. Fig. 10 and Fig. 11 are each a rear view of a portion of the straddled vehicle 1. Fig. 10 shows a state in which the lower footrest 46 is disposed in the use position. Fig. 11 shows a state in which the lower footrest 46 is disposed in the non-use position.

As shown in Fig. 9, a side surface 29s of the rear under cover 29 extends downward from the side surface 27s of the foot board 27. The side surface 29s of the rear under cover 29 extends obliquely downward toward the vehicle center WO (see Fig. 4). The side surface 29s of the rear under cover 29 includes the ceiling portion 49 inward concaved in the vehicle width direction. A portion of the ceiling portion 49 is disposed over the lower footrest 46. The ceiling portion 49 and the lower footrest 46 face each other in the up-down direction.

At least a portion of the ceiling portion 49 extends obliquely downward toward the vehicle center WO (see Fig. 4). The ceiling portion 49 may extend obliquely downward from an upper end 49u of the ceiling portion 49 to a lower end 49L of the ceiling portion 49, and may include at least one of a horizontal portion and a vertical portion and an inclined portion extending obliquely downward toward the vehicle center WO. The upper end 49u of the ceiling portion 49 corresponds to an outer end of the ceiling portion 49 disposed at an outermost position in the vehicle width direction in the ceiling portion 49. The lower end 49L of the ceiling portion 49 is disposed farther inward than the upper end 49u of the ceiling portion 49 in the vehicle width direction.

When the lower footrest 46 is disposed in the use position, the lower footrest 46 is disposed farther outward than the ceiling portion 49 in the vehicle width direction, and does not overlap the ceiling portion 49 in a rear view as shown in Fig. 10. On the other hand, when the lower footrest 46 is disposed in the non-use position, the lower footrest 46 is disposed behind the ceiling portion 49, and overlaps the ceiling portion 49 in a rear view as shown in Fig. 11. When the lower footrest 46 is disposed in the use position, at least a portion of the lower footrest 46 may overlap the ceiling portion 49 in a rear view.

As shown in Fig. 9, the upper end 49u of the ceiling portion 49 and the lower end 49L of the ceiling portion 49 are disposed below any portion of the upper footrest 45. The upper end 49u of the ceiling portion 49 and the lower end 49L of the ceiling portion 49 are disposed above any portion of the lower footrest 46. Therefore, the upper end 49u of the ceiling portion 49 and the lower end 49L of the ceiling portion 49 are disposed above the outer end 46o of the lower footrest 46 that corresponds to the upper end of the lower footrest 46.

The outer end 45o of the upper footrest 45 and the inner end 46i of the lower footrest 46 are disposed at positions farther inward than the upper end 49u of the ceiling portion 49 in the vehicle width direction and farther outward than the lower end 49L of the ceiling portion 49 in the vehicle width direction. At least a portion of the upper footrest 45 is disposed above the ceiling portion 49, and overlaps the ceiling portion 49 in a plan view. At least a portion of the ceiling portion 49 is disposed above the lower footrest 46, and overlaps the lower footrest 46 in a plan view. Therefore, the ceiling portion 49 overlaps both the upper footrest 45 and the lower footrest 46 in a plan view.

The upper end 49u of the ceiling portion 49 and the lower end 49L of the ceiling portion 49 are disposed farther inward than the outer end 46o of the lower footrest 46 in the vehicle width direction. The upper end 49u of the ceiling portion 49 is disposed farther outward than the inner end 46i of the lower footrest 46 in the vehicle width direction. On the other hand, the lower end 49L of the ceiling portion 49 is disposed farther inward than the inner end 46i of the lower footrest 46 in the vehicle width direction. The lower end 49L of the ceiling portion 49 may be disposed farther outward than the inner end 46i of the lower footrest 46 in the vehicle width direction. The lower end 49L of the ceiling portion 49 is disposed farther outward than the outer end 32o of the lower side cover 32 that corresponds to the outer end of the side covers 31 and 32 in the vehicle width direction.

A distance D1 in the up-down direction from the upper end 49u of the ceiling portion 49 to the lower end 49L of the ceiling portion 49 is longer than a distance D2 in the up-down direction from the lower end 49L of the ceiling portion 49 to the upper end of the lower footrest 46 (which corresponds to the outer end 46o). The distance D1 is longer than a distance D3 in the vehicle width direction from the upper end 49u of the ceiling portion 49 to the lower end 49L of the ceiling portion 49. The distance D1 is longer than a distance D4 in the vehicle width direction from the outer end 46o of the lower footrest 46 to the inner end 46i of the lower footrest 46. The distance D2 is shorter than the distance D3. The distance D2 is shorter than the distance D4. The distance D3 is shorter than the distance D4. However, a relationship among the distance D1 to the distance D4 is not limited to this.

As described above, in the present preferred embodiment, the foot of the driver sitting on the driver seat 6d (in detail, the footwear of the driver) is placed on the front footrest 43. The foot of the passenger sitting on the tandem seat 6t (in detail, the footwear of the passenger) is placed on the upper footrest 45 or on the lower footrest 46. In other words, the passenger is able to select a position at which the foot is placed from the upper footrest 45 and the lower footrest 46. The upper footrest 45 and the lower footrest 46 are disposed at mutually different heights. For example, the foot of the passenger would be placed on the upper footrest 45 when a small person sits on the tandem seat 6t or when the sitting position of the driver is more rearward than usual. Therefore, it is possible for the passenger to place the foot on the upper footrest 45 or on the lower footrest 46 in a comfortable posture regardless of the physical size of the passenger or regardless of the sitting position of the driver.

For example, the foot of the passenger would be placed on the lower footrest 46 when a person of average stature or of large stature sits on the tandem seat 6t. In this case, the foot of the passenger is disposed between the ceiling portion 49 of the exterior cover and the lower footrest 46. In a cross section of the ceiling portion 49 (hereinafter referred to as a "predetermined cross section" if necessary) that is perpendicular to the front-rear direction and that is along a vertical plane passing through the lower footrest 46, the upper end 49u of the ceiling portion 49 is disposed at a more outward position in the vehicle width direction than the inner end 46i of the lower footrest 46. Therefore, the ankle of the passenger whose foot is placed on the lower footrest 46 is disposed near the upper end 49u of the ceiling portion 49 in the vehicle width direction.

On the other hand, in the predetermined cross section of the ceiling portion 49, the lower end 49L of the ceiling portion 49 is disposed at a more inward position in the vehicle width direction than the upper end 49u of the ceiling portion 49. Therefore, in the predetermined cross section of the ceiling portion 49, the ceiling portion 49 extends inward toward the lower end 49L of the ceiling portion 49 in the vehicle width direction. Human medial malleolus protrudes inward from the ankle. Therefore, the ceiling portion 49 recedes inward from the medial malleolus of the passenger in the vehicle width direction in proportion to an approach to the lower end 49L of the ceiling portion 49.

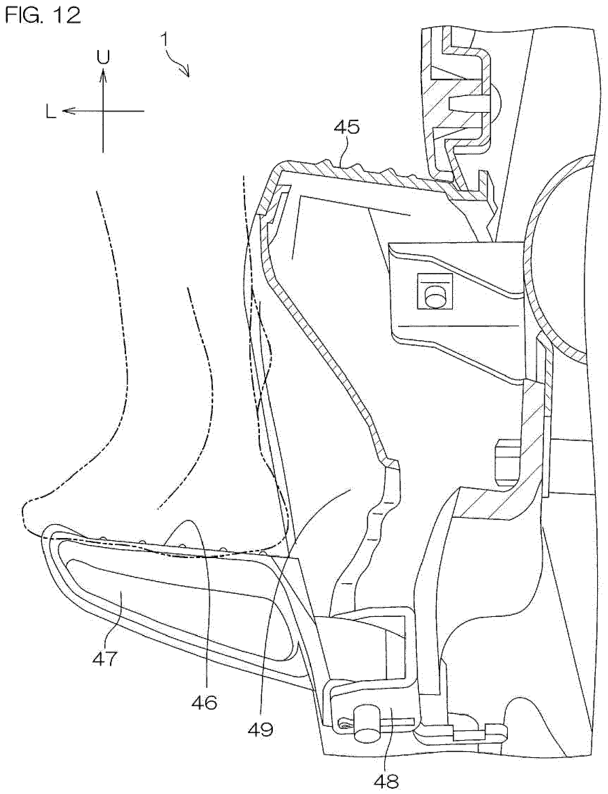

Fig. 12 shows a cross section along a vertical plane that perpendicularly intersects the front-rear direction. An alternate long and two short dashed line represents the foot of the passenger placed on the lower footrest 46. In a cross section of the ceiling portion 49 shown in Fig. 12, the ceiling portion 49 extends inward in the vehicle width direction as the lower footrest 46 is approached, and therefore the ceiling portion 49 is away from the heel of the passenger inward in the vehicle width direction. Similarly, the ceiling portion 49 is away from the medial malleolus of the passenger inward in the vehicle width direction.

As thus described, in the predetermined cross section of the ceiling portion 49, the upper end 49u of the ceiling portion 49 is disposed near the ankle of the passenger whose foot is placed on the lower footrest 46, whereas the ceiling portion 49 recedes inward from the medial malleolus of the passenger in the vehicle width direction as the lower end 49L of the ceiling portion 49 is approached. The medial malleolus of the passenger enters a space under the ceiling portion 49 depending on how to place the foot on the lower footrest 46. Therefore, how to place the foot of the passenger on the lower footrest 46 is not easily restricted by the ceiling portion 49.

Additionally, the ceiling portion 49 is concaved inward in the vehicle width direction, and therefore the heel of the passenger does not easily come into contact with the ceiling portion 49 even if the position of the foot with respect to the lower footrest 46 is more inward than usual. Therefore, a range within which the foot is able to be placed on the lower footrest 46 is widened in the vehicle width direction. In other words, the passenger is able not only to select a position at which the foot is placed from the upper footrest 45 and the lower footrest 46 but also to move this position in the vehicle width direction within the range of the lower footrest 46. From these reasons, it is possible to make the comfort of the passenger even higher.

In the present preferred embodiment, the intermediate footrest 44 is provided in addition to the front footrest 43, the upper footrest 45, and the lower footrest 46. The intermediate footrest 44 extends rearward from the front footrest 43. Therefore, the driver sitting on the driver seat 6d is able to select a position at which the foot is placed from the front footrest 43 and the intermediate footrest 44, and a range within which the foot of the driver is able to be placed is widened in the front-rear direction. Additionally, the intermediate footrest 44 extends forward from the upper footrest 45. Therefore, the passenger sitting on the tandem seat 6t is able to select a position at which the foot is placed from among the upper footrest 45, the lower footrest 46, and the intermediate footrest 44, and a range within which the foot of the passenger is able to be placed is widened in the front-rear direction.

In the present preferred embodiment, the intermediate footrest 44 is disposed at a more rearward position than the front end 6f of the seat 6 that corresponds to the front end of the driver seat 6d. Therefore, the underside of the foot is easily directed rearward when the driver places the foot on the intermediate footrest 44. On the other hand, the rear end of the intermediate footrest 44 that corresponds to the front end 45f of the upper footrest 45 is disposed at a position higher than the upper end Rhu of the wheel Rh of the rear wheel Rw and farther to the front than the rotation axis Ac of the engine 11 in a side view. In other words, the rear end of the intermediate footrest 44 is disposed not only at a comparatively forward position but also at a comparatively high position. Therefore, the intermediate footrest 44 is obliquely inclined at a comparatively great angle with respect to a horizontal plane. When the underside of the foot of the driver is directed rearward, the driver is able to easily place the foot on the intermediate footrest 44 if the inclination angle of the intermediate footrest 44 is great. Therefore, it is possible to improve the comfort of the driver.

In the present preferred embodiment, the outer end 45o of the upper footrest 45 and the inner end 45i of the upper footrest 45 are disposed below the outer end of the side covers 31 and 32 that correspond to the outer end 32o of the lower side cover 32. The outer end 45o of the upper footrest 45 is disposed at a more outward position in the vehicle width direction than the outer end of the side covers 31 and 32, whereas the inner end 45i of the upper footrest 45 is disposed at a more inward position in the vehicle width direction than the outer end of the side covers 31 and 32. Therefore, it is possible to increase the width of the upper footrest 45 in the vehicle width direction while minimizing or preventing an increase in width of the straddled vehicle 1.

In the present preferred embodiment, the rear end 45r of the upper footrest 45 and the rear end 46r of the lower footrest 46 (see Fig. 6) are disposed at a more forward position than the rotation axis Ac of the engine 11. Therefore, the passenger sitting on the tandem seat 6t is able to place the foot on either one of the upper footrest 45 and the lower footrest 46 in a comfortable posture in which the knee of the passenger is straightened. Additionally, the lower footrest 46 is disposed not only at a lower position than the upper footrest 45 but also at a more forward position than the rotation axis Ac of the engine 11, and therefore the distance from the tandem seat 6t to the lower footrest 46 increases. Therefore, the passenger is able to place the foot on the lower footrest 46 in a comfortable posture in which the knee is straightened even when a large person sits on the tandem seat 6t.

In the present preferred embodiment, the lower end of the lower footrest 46, which corresponds to the inner end 46i of the lower footrest 46, is disposed above the rotation axis Ac of the engine 11. Therefore, the lower end of the upper footrest 45 is also disposed above the rotation axis Ac of the engine 11. As thus described, the upper footrest 45 and the lower footrest 46 are disposed at a comparatively high position, hence enabling the passenger sitting on the tandem seat 6t to place the foot on either one of the upper and lower footrests 45 and 46 without extremely straighten the knee.

In the present preferred embodiment, the width of the upper footrest 45 is smaller than the width of the lower footrest 46. In other words, the length of the upper footrest 45 in the vehicle width direction is shorter than the length of the lower footrest 46 in the vehicle width direction. It is conceivable that the foot of a small person would be placed on the upper footrest 45. A person of small stature is smaller in foot width than a person of average stature or a large person in many cases. Therefore, the passenger is able to place the foot on the upper footrest 45 even if the upper footrest 45 is shorter than the lower footrest 46 in the vehicle width direction. Therefore, it is possible to minimize or prevent an increase in width of the straddled vehicle 1 while maintaining the comfort of the passenger.

In the present preferred embodiment, the upper footrest 45 and the lower footrest 46 are disposed not only at mutually different heights but also with a sufficient distance therebetween in the up-down direction. In other words, the upper footrest 45 overlaps the storage box 16 in a side view, whereas the lower footrest 46 is disposed below the storage box 16, and does not overlap the storage box 16 in a side view. As thus described, the upper footrest 45 and the lower footrest 46 are sufficiently away from each other in the up-down direction, and therefore the passenger is able to comfortably place the foot on the upper footrest 45 or on the lower footrest 46 regardless of the physical size of the passenger or regardless of a sitting position of the driver.

In the present preferred embodiment, the ceiling portion 49 overlaps both the upper footrest 45 and the lower footrest 46 in a plan view. In other words, at least a portion of the ceiling portion 49 is disposed above the lower footrest 46, and overlaps the lower footrest 46 in a plan view. At least a portion of the upper footrest 45 is disposed above the ceiling portion 49, and overlaps the ceiling portion 49 in a plan view. The employment of this layout makes it possible to minimize or prevent an increase in width of the straddled vehicle 1.

In the present preferred embodiment, the distance D1 in the up-down direction from the upper end 49u of the ceiling portion 49 to the lower end 49L of the ceiling portion 49 is relatively long. Therefore, the upper end 49u of the ceiling portion 49 is sufficiently away upward from the lower footrest 46. On the other hand, the distance D2 in the up-down direction from the lower end 49L of the ceiling portion 49 to the upper end of the lower footrest 46 (which corresponds to the outer end 46o) is relatively short. Therefore, the lower end 49L of the ceiling portion 49 is disposed near the lower footrest 46 with respect to the up-down direction. In this layout, the medial malleolus of the passenger whose foot is placed on the lower footrest 46 is easily disposed at a height between the upper end 49u of the ceiling portion 49 and the lower end 49L of the ceiling portion 49.

Additionally, in comparison with the distance D2 in the up-down direction from the lower end 49L of the ceiling portion 49 to the upper end of the lower footrest 46, the distance D3 in the vehicle width direction from the upper end 49u of the ceiling portion 49 to the lower end 49L of the ceiling portion 49 is relatively long. In other words, the ceiling portion 49 is largely concaved inward in the vehicle width direction, and a comparatively large space is secured below the ceiling portion 49. Therefore, the heel of the passenger whose foot is placed on the lower footrest 46 does not easily come into contact with the ceiling portion 49, and the position of the foot of the passenger with respect to the lower footrest 46 is not easily restricted by the ceiling portion 49. Therefore, it is possible to make the comfort of the passenger even higher.

### Other Preferred Embodiments

The above-described preferred embodiments may be modified as follows.

For example, the rear end of the intermediate footrest 44 (which corresponds to the front end 45f) may be disposed below the upper end Rhu of the wheel Rh of the rear wheel Rw. The rear end of the intermediate footrest 44 may be disposed at a more rearward position than the rotation axis Ac of the engine 11. The intermediate footrest 44 may be omitted from the straddled vehicle 1.

The side covers 31 and 32 are not necessarily required to overlap the upper footrest 45 in a plan view. In detail, the inner end 45i of the upper footrest 45 may be disposed at a more outward position in the vehicle width direction than the outer end of the side covers 31 and 32 that correspond to the outer end 32o of the lower side cover 32.

At least one of the rear end 45r of the upper footrest 45 and the rear end 46r of the lower footrest 46 (see Fig. 6) may be disposed at a more rearward position than the rotation axis Ac of the engine 11.

The lower end of the lower footrest 46 (which corresponds to the inner end 46i) may be disposed below the rotation axis Ac of the engine 11.

The width of the upper footrest 45 may be equal to the width of the lower footrest 46, or may be wider than the width of the lower footrest 46.

All portions of the upper footrest 45 may be disposed below the lower end 16L of the storage box 16. Alternatively, both the upper footrest 45 and the lower footrest 46 may overlap the storage box 16 in a side view. The storage box 16 may be omitted from the straddled vehicle 1.

The upper footrest 45 is not necessarily required to overlap the ceiling portion 49 of the lower under cover 28 in a plan view.

The lower footrest 46 may overlap both the intermediate footrest 44 and the upper footrest 45 in a plan view. Alternatively, the lower footrest 46 may overlap the intermediate footrest 44 in a plan view without overlapping the upper footrest 45 in a plan view.

The central footrest 42 of the foot board 27 may be disposed above the pair of front footrests 43 not at a height equal to that of the pair of front footrests 43.

The straddled vehicle 1 may include, instead of the engine 11 which is an example of a power source, an electric motor which is another example of the power source or may include both of the engine 11 and the electric motor.

The straddled vehicle 1 is not limited to a scooter type motorcycle in which the engine 11 is swingable with respect to the frame 2, but may be an underbone type motorcycle in which the power source is fixed to the frame 2. The straddled vehicle 1 is not limited to a two-wheeled vehicle, but may be a three-wheeled vehicle or a four-wheeled vehicle. In a case of a three-wheeled vehicle, two front wheels Fw may be provided or two rear wheels Rw may be provided. The straddled vehicle 1 may be a snowmobile.

Two or more arrangements among all the arrangements described above may be combined.

## Claims

1. A straddled vehicle (1) comprising:
a driver seat (6d) configured for a driver to sit on;
a tandem seat (6t) that is disposed behind the driver seat (6d) in a vehicle front-rear direction and in a plan view of the vehicle and configured for a passenger to sit on;
a front footrest (43) on which a foot of the driver sitting on the driver seat (6d) is placed;
an upper footrest (45) that is disposed farther to the rear than the front footrest (43) in the vehicle front-rear direction and configured for a foot of the passenger sitting on the tandem seat (6t) to place on;
a lower footrest (46) that is disposed at a position farther to the rear than the front footrest (43) in the vehicle front-rear direction and lower than the upper footrest (45) in a vehicle up-down direction and configured for the foot of the passenger sitting on the tandem seat (6t) to place on; and
an exterior cover (29, 31, 32) including a side surface (29s) that includes a ceiling portion (49) at least a portion of which is disposed above the lower footrest (46) in the vehicle up-down direction, the ceiling portion (49) facing the lower footrest (46) in the vehicle up-down direction;
wherein, in a predetermined cross section of the ceiling portion (49) along a vertical plane that perpendicularly intersects the vehicle front-rear direction, an upper end (49u) of the ceiling portion (49) is disposed above an upper end (46o) of the lower footrest (46) in the vehicle up-down direction, and at least a portion of the lower footrest (46) is disposed at a position farther inward than the upper end (49u) of the ceiling portion (49) in the vehicle width direction and farther outward than the lower end (49L) of the ceiling portion (49) in the vehicle width direction, **characterized in that** a lower end (49L) of the ceiling portion (49) is disposed farther inward than the upper end (49u) of the ceiling portion (49) in a vehicle width direction, wherein
an intermediate footrest (44) extends rearward from the front footrest (43) to the upper footrest (45) in the vehicle front-rear direction and is configured for the foot of the driver or of the passenger to place on.

2. A straddled vehicle (1) according to claim 1, **characterized by**:
a rear wheel (Rw) including a tire (Rt) that rolls on a road surface and a wheel (Rh) surrounded by the tire (Rt); and
an engine (11) that rotates the rear wheel (Rw),
wherein any portion of the intermediate footrest (44) is disposed farther to the rear than a front end (6f) of the driver seat (6d) in the vehicle front-rear direction, and
a rear end (45f) of the intermediate footrest (44) is disposed at a position higher than an upper end (Rhu) of the wheel (Rh) of the rear wheel (Rw) in the vehicle up-down direction and farther to the front than a rotation axis (Ac) of the engine (11) in the vehicle front-rear direction in a side view of the vehicle.

3. A straddled vehicle (1) according to claim 2, **characterized in that** a rear end (45r) of the upper footrest (45) and a rear end (46r) of the lower footrest (46) are disposed farther to the front than the rotation axis (Ac) of the engine (11) in the vehicle front-rear direction.

4. A straddled vehicle (1) according to claim 2 or 3, **characterized in that** a lower end (46i) of the lower footrest (46) is disposed above the rotation axis (Ac) of the engine (11) in the vehicle up-down direction.

5. A straddled vehicle (1) according to any one of claim 1 to 4, **characterized in that** the exterior cover (29, 31, 32) includes a side cover (31, 32) at least a portion of which is disposed over the upper footrest (45) in the side view of the vehicle, and
an outer end (45o) of the upper footrest (45) in the vehicle width direction is disposed at a position lower than an outer end (32o) of the side cover (31, 32) in the vehicle up-down direction and farther outward in the vehicle width direction than the outer end (32o) of the side cover (31, 32), and
an inner end (45i) of the upper footrest (45) in the vehicle width direction is disposed at a position lower than the outer end (32o) of the side cover (31, 32) in the vehicle up-down direction and farther inward in the vehicle width direction than the outer end (32o) of the side cover (31, 32).

6. A straddled vehicle (1) according to claim 1, **characterized by** an engine (11),
wherein a rear end (45r) of the upper footrest (45) and a rear end (46r) of the lower footrest (46) are disposed farther to the front than a rotation axis (Ac) of the engine (11) in the vehicle front-rear direction.

7. A straddled vehicle (1) according to claim 1 **characterized by** an engine (11),
wherein a lower end (46i) of the lower footrest (46) is disposed above a rotation axis (Ac) of the engine (11) in the vehicle up-down.

8. A straddled vehicle (1) according to any one of claim 1 to 7, **characterized in that** the upper footrest (45) is shorter than the lower footrest (46) in the vehicle width direction.

9. A straddled vehicle (1) according to any one of claim 1 to 8, **characterized by** a storage box (16) configured for an article to put in, that is disposed under the driver seat (6d) in the plan view of the vehicle, and that is opened and closed by the driver seat (6d),
wherein the upper footrest (45) is disposed farther outward than the storage box (16) in the vehicle width direction and overlaps the storage box (16) in the side view of the vehicle, and
the upper end (46o) of the lower footrest (46) is disposed farther outward than the storage box (16) in the vehicle width direction and disposed below a lower end (16L) of the storage box (16) in the vehicle up-down direction.

10. A straddled vehicle (1) according to any one of claim 1 to 9, **characterized in that** at least a portion of the upper footrest (45) is disposed above the ceiling portion (49) in the vehicle up-down direction, and overlaps the ceiling portion (49) in the plan view of the vehicle.

11. A straddled vehicle (1) according to any one of claim 1 to 10, **characterized in that,** in the predetermined cross section of the ceiling portion (49), a distance (D1) in the vehicle up-down direction from the upper end (49u) of the ceiling portion (49) to the lower end (49L) of the ceiling portion (49) is longer than a distance (D2) in the vehicle up-down direction from the lower end (49L) of the ceiling portion (49) to the upper end (46o) of the lower footrest (46), and
in the predetermined cross section of the ceiling portion (49), a distance (D3) in the vehicle width direction from the upper end (49u) of the ceiling portion (49) to the lower end (49L) of the ceiling portion (49) is longer than the distance (D2) in the vehicle up-down direction from the lower end (49L) of the ceiling portion (49) to the upper end (46o) of the lower footrest (46).

## Patentansprüche

1. Ein Spreiz-Sitz-Fahrzeug (1), das umfasst:
einen Fahrersitz (6d), der konfiguriert ist, für einen Fahrer, um darauf zu sitzen;
einen Tandemsitz (6t), der hinter dem Fahrersitz (6d) in einer Fahrzeug-Vorder-Rück-Richtung und in einer Draufsicht auf das Fahrzeug angeordnet ist, und konfiguriert ist, für einen Passagier, um darauf zu sitzen;
eine vordere Fußstütze (43), auf die ein Fuß des Fahrers, der auf dem Fahrersitz (6d) sitzt, gestellt ist;
eine obere Fußstütze (45), die weiter hinten angeordnet ist als die vordere Fußstütze (43) in der Fahrzeug-Vorder-Rück-Richtung, und konfiguriert ist, um einen Fuß des Passagiers, der auf dem Tandemsitz (6t) sitzt, darauf zu setzen;
eine untere Fußstütze (46), die an einer Position weiter hinten als die vordere Fußstütze (43) in der Fahrzeug-Vorder-Rück-Richtung und niedriger als die obere Fußstütze (45) in einer Fahrzeug-Auf-Ab-Richtung angeordnet ist, und konfiguriert ist, um den Fuß des Passagiers, der auf dem Tandemsitz (6t) sitzt, darauf zu setzen;
eine äußere Abdeckung (29, 31, 32), die eine Seitenfläche (29s) enthält, die einen Deck-Abschnitt (49) enthält, von dem zumindest ein Abschnitt oberhalb der unteren Fußstütze (46) in der Fahrzeug-Auf-Ab-Richtung angeordnet ist, der Deck-Abschnitt (49) ist der unteren Fußstütze (46) in der Fahrzeug-Auf-Ab-Richtung zugewandt;
wobei in einem vorbestimmten Querschnitt des Deck-Abschnitts (49) entlang einer vertikalen Ebene, welche die Fahrzeug-Vorder-Rück-Richtung senkrecht schneidet, ein oberes Ende (49u) des Deck-Abschnitts (49) oberhalb eines oberen Endes (46o) der unteren Fußstütze (46) in der Fahrzeug-Auf-Ab-Richtung angeordnet ist, und zumindest ein Abschnitt der unteren Fußstütze (46) an einer Position angeordnet ist, die weiter innen als das obere Ende (49u) des Deck-Abschnitts (49) in der Fahrzeug-Breiten-Richtung und weiter außen als das untere Ende (49L) des Deck-Abschnitts (49) in der Fahrzeug-Breiten-Richtung positioniert ist, **dadurch gekennzeichnet, dass** ein unteres Ende (49L) des Deck-Abschnitts (49) weiter innen als das obere Ende (49u) des Deck-Abschnitts (49) in einer Fahrzeug-Breiten-Richtung angeordnet ist, wobei
eine Zwischenfußstütze (44) sich von der vorderen Fußstütze (43) bis zur oberen Fußstütze (45) in Fahrzeug-Vorder-Rück-Richtung nach hinten erstreckt und konfiguriert ist, um den Fuße des Fahrers oder des Passagiers darauf zu setzen.

2. Ein Spreiz-Sitz-Fahrzeug (1) gemäß Anspruch 1, **gekennzeichnet durch:**
ein Hinterrad (Rw), das einen Reifen (Rt) enthält, der auf der Fahrbahn abrollt, und einem Rad (Rh), das von dem Reifen (Rt) umgeben ist; und
einen Motor (11), der das Hinterrad (Rw) dreht,
wobei ein beliebiger Abschnitt der Zwischenfußstütze (44) weiter hinten angeordnet ist als ein vorderes Ende (6f) des Fahrersitzes (6d) in der Fahrzeug-Vorder-Rück-Richtung, und
ein hinteres Ende (45f) der Zwischenfußstütze (44) an einer Position angeordnet ist, die höher als ein oberes Ende (Rhu) des Rads (Rh) des Hinterrads (Rw) in der Fahrzeug-Auf-Ab-Richtung und weiter vorne als eine Drehachse (Ac) des Motors (11) in der Fahrzeug-Vorder-Rück-Richtung in einer Seitenansicht des Fahrzeugs positioniert ist.

3. Ein Spreiz-Sitz-Fahrzeug (1) gemäß Anspruch 2, **dadurch gekennzeichnet, dass** ein hinteres Ende (45r) der oberen Fußstütze (45) und ein hinteres Ende (46r) der unteren Fußstütze (46) weiter vorne angeordnet sind als die Drehachse (Ac) des Motors (11) in der Fahrzeug-Vorder-Hinter-Richtung.

4. Ein Spreiz-Sitz-Fahrzeug (1) gemäß Anspruch 2 oder 3, **dadurch gekennzeichnet, dass** ein unteres Ende (46i) der unteren Fußstütze (46) oberhalb der Drehachse (Ac) des Motors (11) in Fahrzeug-Auf-Ab-Richtung angeordnet ist.

5. Ein Spreiz-Sitz-Fahrzeug (1) gemäß irgendeinem der Ansprüche 1 bis 4, **dadurch gekennzeichnet, dass** die äußere Abdeckung (29, 31, 32) eine Seitenabdeckung (31, 32) enthält, von der zumindest ein Abschnitt über der oberen Fußstütze (45) in der Seitenansicht des Fahrzeugs angeordnet ist, und
ein äußeres Ende (45o) der oberen Fußstütze (45) in der Fahrzeug-Breiten-Richtung an einer Position niedriger als ein äußeres Ende (32o) der Seitenabdeckung (31, 32) in der Fahrzeug-Auf-Ab-Richtung und weiter außen in der Fahrzeug-Breiten-Richtung als das äußere Ende (32o) der Seitenabdeckung (31, 32) angeordnet ist, und
ein inneres Ende (45i) der oberen Fußstütze (45) in der Fahrzeug-Breiten-Richtung an einer Position niedriger als das äußere Ende (32o) der Seitenabdeckung (31, 32) in der Fahrzeug-Auf-Ab-Richtung und weiter innen in der Fahrzeug-Breiten-Richtung als das äußere Ende (32o) der Seitenabdeckung (31, 32) angeordnet ist.

6. Ein Spreiz-Sitz-Fahrzeug (1) gemäß Anspruch 1, **gekennzeichnet durch** einen Motor (11),
wobei ein hinteres Ende (45r) der oberen Fußstütze (45) und ein hinteres Ende (46r) der unteren Fußstütze (46) weiter vorne angeordnet sind als eine Drehachse (Ac) des Motors (11) in der Fahrzeug-Vorder-Rück-Richtung.

7. Ein Spreiz-Sitz-Fahrzeug (1) gemäß Anspruch 1, **gekennzeichnet durch** einen Motor (11),
wobei ein unteres Ende (46i) der unteren Fußstütze (46) oberhalb einer Drehachse (Ac) des Motors (11) in der Fahrzeug-Auf-Ab-Richtung angeordnet ist.

8. Ein Spreiz-Sitz-Fahrzeug (1) gemäß irgendeinem der Ansprüche 1 bis 7, **dadurch gekennzeichnet, dass** die obere Fußstütze (45) in Fahrzeug-Breiten-Richtung kürzer ist als die untere Fußstütze (46) in Fahrzeug-Breiten-Richtung.

9. Ein Spreiz-Sitz-Fahrzeug (1) gemäß irgendeinem der Ansprüche 1 bis 8, **gekennzeichnet durch** eine Ablagebox (16), die konfiguriert ist, um einen Gegenstand abzulegen, unter dem Fahrersitz (6d) die in der Draufsicht auf das Fahrzeug angeordnet ist und die durch den Fahrersitz (6d) geöffnet und geschlossen wird,
wobei die obere Fußstütze (45) weiter außen als die Ablagebox (16) in Fahrzeug-Breiten-Richtung angeordnet ist, und die Ablagebox (16) in der Seitenansicht des Fahrzeugs überlappt, und
das obere Ende (46o) der unteren Fußstütze (46) weiter außen angeordnet ist als der Ablagebox (16) in Fahrzeug-Breiten-Richtung und unterhalb eines unteren Endes (16L) der Ablagebox (16) in Fahrzeug-Auf-Ab-Richtung angeordnet ist.

10. Ein Spreiz-Sitz-Fahrzeug (1) gemäß irgendeinem der Ansprüche 1 bis 9, **dadurch gekennzeichnet, dass** zumindest ein Abschnitt der oberen Fußstütze (45) oberhalb des Deck-Abschnitts (49) in Fahrzeug-Auf-Ab-Richtung angeordnet ist und in der Draufsicht des Fahrzeugs den Deck-Abschnitt (49) überlappt.

11. Ein Spreiz-Sitz-Fahrzeug (1) gemäß irgendeinem der Ansprüche 1 bis 10, **dadurch gekennzeichnet, dass** in dem vorbestimmten Querschnitt des Deck-Abschnitts (49) ein Abstand (D1) in der Fahrzeug-Auf-Ab-Richtung von dem oberen Ende (49u) des Deck-Abschnitts (49) zum unteren Ende (49L) des Deck-Abschnitts (49) länger ist als ein Abstand (D2) in der Fahrzeug-Auf-Ab-Richtung von dem unteren Ende (49L) des Deck-Abschnitts (49) zum oberen Ende (46o) der unteren Fußstütze (46), und
in dem vorbestimmten Querschnitt des Deck-Abschnitts (49) ein Abstand (D3) in der Fahrzeug-Breiten-Richtung von dem oberen Ende (49u) des Deck-Abschnitts (49) zu dem unteren Ende (49L) des Deck-Abschnitts (49) länger ist als der Abstand (D2) in der Fahrzeug-Auf-Ab-Richtung von dem unteren Ende (49L) des Deck-Abschnitts (49) zu dem oberen Ende (46o) der unteren Fußstütze (46).

## Revendications

1. Véhicule à selle (1) comprenant :
un siège de conducteur (6d) configuré pour qu'un conducteur s'y assoie,
un siège tandem (6t) qui est placé derrière le siège de conducteur (6d) dans la direction avant arrière du véhicule et dans une vue en plan du véhicule et qui est configuré pour qu'un passager s'y assoie,
un repose pied avant (43) sur lequel est placé un pied du conducteur assis sur le siège de conducteur (6d),
un repose pied supérieur (45) qui est placé plus loin vers l'arrière que le repose pied avant (43) dans la direction avant arrière du véhicule et qui est configuré pour placer un pied du passager assis sur le siège tandem (6t),
un repose pied inférieur (46) qui est placé à une position plus loin vers l'arrière que le repose pied avant (43) dans la direction avant arrière du véhicule et qui est plus bas que le repose pied supérieur (45) dans la direction haut bas du véhicule et qui est configuré pour placer le pied du passager assis sur le siège tandem (6t), et
un carénage extérieur (29, 31, 32) incluant une surface latérale (29s) qui inclut un élément de voûte (49) dont au moins une partie est placée au-dessus du repose pied inférieur (46) dans la direction haut bas du véhicule, l'élément de voûte (49) faisant face au repose pied inférieur (46) dans la direction haut bas du véhicule,
dans lequel, dans une section transversale prédéterminée de l'élément de voûte (49) le long d'un plan vertical qui coupe perpendiculairement la direction avant arrière du véhicule, l'extrémité supérieure (49u) de l'élément de voûte (49) est placée au-dessus de l'extrémité supérieure (46o) du repose pied inférieur (46) dans la direction haut bas du véhicule, et au moins une partie du repose pied inférieur (46) est placée à une position plus vers l'intérieur que l'extrémité supérieure (49u) de l'élément de voûte (49) dans la direction de la largeur du véhicule et plus vers l'extérieur que l'extrémité inférieure (49L) de l'élément de voûte (49) dans la direction de la largeur du véhicule, **caractérisé en ce que** l'extrémité inférieure (49L) de l'élément de voûte (49) est placée plus vers l'intérieur que l'extrémité supérieure (49u) de l'élément de voûte (49) dans la direction de la largeur du véhicule, dans lequel
un repose pied intermédiaire (44) s'étend vers l'arrière à partir du repose pied avant (43) vers le repose pied supérieur (45) dans la direction avant arrière du véhicule et il est configuré pour placer le pied du conducteur ou du passager.

2. Véhicule à selle (1) selon la revendication 1, **caractérisé par** :
une roue arrière (Rw) incluant un pneumatique (Rt) qui roulent sur la surface d'une route, ainsi qu'une roue (Rh) entourée par le pneumatique (Rt), et
un moteur thermique (11) qui fait tourner la roue arrière (Rw),
dans lequel toute partie du repose pied intermédiaire (44) est placée plus loin vers l'arrière que l'extrémité avant (6f) du siège de conducteur (6d) dans la direction avant arrière du véhicule, et
l'extrémité arrière (45f) du repose pied intermédiaire (44) est placée à une position située plus haute que l'extrémité supérieure (Rhu) de la roue (Rh) de la roue arrière (Rw) dans la direction haut bas du véhicule et plus loin vers l'avant que l'axe de rotation (Ac) du moteur (11) dans la direction avant arrière du véhicule selon une vue latérale du véhicule.

3. Véhicule à selle (1) selon la revendication 2, **caractérisé en ce que** l'extrémité arrière (45r) du repose pied supérieur (45) et l'extrémité arrière (46r du repose pied inférieur (46) sont placées plus loin vers l'avant que l'axe de rotation (Ac) du moteur (11) dans la direction avant arrière du véhicule.

4. Véhicule à selle (1) selon la revendication 2 ou la revendication 3, **caractérisé en ce que** l'extrémité inférieure (46i) du repose pied inférieur (46) est placée au-dessus de l'axe de rotation (Ac) du moteur (11) dans la direction haut bas du véhicule.

5. Véhicule à selle (1) selon l'une quelconque des revendications 1 à 4, **caractérisé en ce que** le carénage extérieur (29, 31, 32) inclut un carénage latéral (31, 32) dont au moins une partie est placée par-dessus du repose pied supérieur (45) selon la vue latérale du véhicule, et
l'extrémité externe (45o) du repose pied supérieur (45) dans la direction de la largeur du véhicule est placée à une position plus basse que l'extrémité externe (32o) du carénage latéral (31, 32) dans la direction haut bas du véhicule et plus loin vers l'extérieur dans la direction de la largeur du véhicule que l'extrémité externe (32o) du carénage latéral (31, 32), et
l'extrémité interne (45i) du repose pied supérieur (45) dans la direction de la largeur du véhicule est placée à une position plus basse que l'extrémité externe (32o) du carénage latéral (31, 32) dans la direction haut bas du véhicule et plus loin vers l'intérieur dans la direction de la largeur du véhicule que l'extrémité externe (32o) du carénage latéral (31, 32).

6. Véhicule à selle (1) selon la revendication 1, **caractérisé par** un moteur thermique (11),
dans lequel l'extrémité arrière (45r) du repose pied supérieur (45) et l'extrémité arrière (46r) du repose pied inférieur (46) sont placées plus loin vers l'avant que l'axe de rotation (Ac) du moteur (11) dans la direction avant arrière du véhicule.

7. Véhicule à selle (1) selon la revendication 1, **caractérisé par** un moteur thermique (11),
dans lequel l'extrémité inférieure (46i) du repose pied inférieur (46) est placée au-dessus de l'axe de rotation (Ac) du moteur (11) dans la direction haut bas du véhicule.

8. Véhicule à selle (1) selon l'une quelconque des revendications 1 à 7, **caractérisé en ce que** le repose pied supérieur (45) est plus court que le repose pied inférieur (46) dans la direction de la largeur du véhicule.

9. Véhicule à selle (1) selon l'une quelconque des revendications 1 à 8, **caractérisé par** un casier de stockage (16) configuré pour y placer un article, lequel est placé sous le siège de conducteur (6d) dans la vue en plan du véhicule, et lequel est ouvert et fermé par le siège de conducteur (6d),
dans lequel le repose pied supérieur (45) est placé plus loin vers l'extérieur que le casier de stockage (16) dans la direction de la largeur du véhicule et chevauche le casier de stockage (16) dans la vue latérale du véhicule, et
l'extrémité supérieure (46o) du repose pied inférieur (46) est placée plus loin vers l'extérieur que le casier de stockage (16) dans la direction de la largeur du véhicule et placée en dessous de l'extrémité inférieure (16L) du casier de stockage (16) dans la direction haut bas du véhicule.

10. Véhicule à selle (1) selon l'une quelconque des revendications 1 à 9, **caractérisé en ce qu'**au moins une partie du repose pied supérieur (45) est placée au-dessus de l'élément de voûte (49) dans la direction haut bas du véhicule et chevauche l'élément de voûte (49) dans la vue en plan du véhicule.

11. Véhicule à selle (1) selon l'une quelconque des revendications 1 à 10, **caractérisé en ce que,** dans la section transversale prédéterminée de l'élément de voûte (49), la distance (D1), dans la direction haut bas du véhicule, depuis l'extrémité supérieure (49u) de l'élément de voûte (49) jusqu'à l'extrémité inférieure (49L) de l'élément de voûte (49) est plus longue que la distance (D2), dans la direction haut bas du véhicule, depuis l'extrémité inférieure (49L) de l'élément de voûte (49) jusqu'à l'extrémité supérieure (46o) du repose pied inférieur (46), et
dans la section transversale prédéterminée de l'élément de voûte (49), la distance (D3), dans la direction de la largeur du véhicule, depuis l'extrémité supérieure (49u) de l'élément de voûte (49) jusqu'à l'extrémité inférieure (49L) de l'élément de voûte (49) est plus longue que la distance (D2), dans la direction haut bas du véhicule, depuis l'extrémité inférieure (49L) de l'élément de voûte (49) jusqu'à l'extrémité supérieure (46o) du repose pied inférieur (46).
